# EUROPÄISCHE PATENTANMELDUNG

(11) **EP 2 278 491 A1**
(43) Veröffentlichungstag der Anmeldung: **26.01.2011**
(21) Anmeldenummer: 10183672.4
(22) Anmeldetag: 21.09.1998
(51) Int. Cl.: G06F 15/02

(54) **Mobile Anzeigevorrichtung mit Koppelmodul zum Einrichten und Einstellen von Inhalten, Systemerweiterungen und/oder Bedienmöglichkeiten**

(30) Priorität: 19.09.1997 DE 19741453
(62) Teilanmeldung aus: 08014650.9
(71) Anmelder: Rolus Borgward, Glenn, 80796 München (DE)
(72) Erfinder: Rolus Borgward, Glenn, 80796 München (DE)
(74) Vertreter: Grünecker, Kinkeldey, Stockmair & Schwanhäusser Anwaltssozietät

(57) **Zusammenfassung**

Die Erfindung stellt eine mobile Anzeigevorrichtung bereit, insbesondere zur Wiedergabe von Text- und Bildinformation, aufweisend: a) eine Anzeigeeinheit (D) mit mindestens einem Bildschirm (3,4), b) eine Bedieneinrichtung, die dem Benutzer Bedienvorgänge ermöglicht, c) eine Koppelvorrichtung mit einer Aufnahmeöffnung (50) zum Einschieben und zum elektrischen Ankoppeln einer Datenträgereinheit (50'), d) wobei das Ankoppeln der Datenträgereinheit ein Einrichten und/oder Einstellen der Anzeigevorrichtung bewirkt und/oder das nach dem Ankoppeln der Datenträgereinheit automatisch Daten aus der Datenträgereinheit ausgelesen werden.

## Beschreibung

Die vorliegende Erfindung betrifft ein digitales Buch, insbesondere zur Wiedergabe von Buch-, Zeitungs-, und Zeitschrifteninformationen und anderen Dokumentationen bzw. Publikationen in elektronischer bzw. digitaler Form mittels Text-, Grafik-, Foto- und/oder Video- und Audioinformationen zur Bedienung durch Laienanwender

Der Papierverbrauch und die damit verbundene Nachfrage an Rohstoffen wächst Jahr für Jahr an. Die stets wachsende Zahl der Bevölkerung und der immer größer werdende Infornationsbedarf, aber auch der selbstauferlegte konkurrenzbedingte Kommunikationszwang verursachen eine sich explosionsartig ausbreitende Informationsflut, welche in immer kürzeren Abständen einen immensen Verbrauch an Papier bedingt, somit nicht nur die Umwelt belastet, sondern auch in Bezug auf Transport-, Lagerhaltungs- und Recyclingkosten sowie in Bezug auf die Bereitstellungsgeschwindigkeit von Publikationen einen wirtschaftlichen Nachteil mit sich bringt. Dank moderner Informationstechnologien ist es zwar Möglich geworden, einen großen Teil der Informationen über Computer zu produzieren, diese über beispielsweise Internet, Online-Dienste oder Datenbanken anzubieten oder in Form von CDs zu vermarkten, jedoch können diese nur über PCs, Laptops und Notebooks vom Verbraucher konsumiert werden, was voraussetzt, daß zumindest einer der vorgenannten Computer angeschafft, notwendige Applikationen installiert, und ihre Anwendung beherrscht werden muß, bevor eine erstes Publikation gelesen werden kann.

Vorgenannnte Gründe und die damit verbunden Investitionskosten, der notwendige Zeitaufwand und das aus Sicht eines technischen Laien erforderliche Spezialwissen zur Installation und Bedienung von Hard- und Software machen es einem großem Teil der Bevölkerung schwer, den Vorteil elektronischer Publikationen zu nutzen. Aber auch ältere oder behinderte Menschen finden oft keinen Zugang zu Computern, da ohne Grundkenntnisse die Bedienung und Handhabung für einen Laien nicht oder nur schwer möglich ist oder die Komplexität der Benutzerschnittstellen diese Menschen überfordert.

Zudem weisen Laptops und Notebooks durch ihre diversen Laufwerke und Vielzahl von Ein- und Ausgabeschnittstellen für bestimmte Benutzungsfälle große Volumina und Gewichte auf, sind mit einer Tastatur für den gesamten jeweils betreffenden Zeichensatz und einem einzigen Bildschirm oder Display ausgestattet. Es gibt jedoch Anwendungsfälle, in denen einerseits die relativ aufwendige und flächenverbrauchende Tastatur unnötig ist und andererseits die nur durch einen einzigen Bildschirm zur Verfügung stehende Anzeige- oder Anzeige-/Bearbeitungsfläche in bestimmten Benutzungsfällen zu klein ist.

Laptops und Notebooks sind durch ihre Bestimmung als Arbeitswerkzeug und die damit verbundenen konstruktionsbedingten bzw. baulichen Merkmale primär kein ergonomisches, d.h. handliches und reduziert zu bedienendes Informationsmittel zur Aufnahme z.B. von schöngeistiger Literatur oder zum Lesen von Berichten, Artikeln, Reportagen und Nachrichten aus Zeitschriften und Zeitungen oder zum Studieren von Publikationen in entspannter Haltung oder in Situationen, wo keine Auflagefläche vorhanden ist. Aufwand und Zeit zur Bedienung stehen oft in keiner Relation zu den oft spontanen Anforderungen, die oft auch noch kurzfristig zu erledigen sind, z.B. das Nachschlagen von Informationen aus einem Lexikon, einem Telefonbuch oder einer Fernsehzeitschrift.

Aus der Druckschrift US 5,534,888 A1 ist ein elektronisches Buch bekannt, welches zwei in der Art eines Buches aufklappbare Anzeligeteile sowie einen diese beiden Anzeigeteile verbindendes Mittelteil aufweist.

Eine einfache ergonomische und kompakte elektronische Vorrichtung als tatsächlicher Buch-, Zeitschrift- oder Zeitungsersatz für einen universellen Einsatz in unterschiedlichen Lebensituationen, welche für technische Laien unkompliziert und komfortabel zu halten und zu bedienen ist und gleichzeitig wenig optische Irritationen zum störungsfreien Lesen und Manipulieren unterschiedlichster Publikationen aufweist ist bislang nicht bekannt. Das aus der US 5,534,888 bekannte elektronische Buch erfordert bei dem Gebrauch durch den Benutzer vielfach umständliche und zeitraubende komplizierte Bedienungsoperationen, da eine Vielzahl von ergonomisch unzweckmäßig angeordneten Tasten zu betätigen ist, deren Funktionalität vorgegeben ist und die den für die Anzeige zur Verfügung stehenden Raum beschneiden. Bei einem aus der US 5,534,888 A1 bekannten elektronischen Buch erfolgt die Bedienung unter Zuhilfenahme eines Hilfsdisplays auf der Außenseite der Buchdeckel (Anzeigeelemente), was dazu führt, daß der Benutzer das elektronische Buch zuklappen muß, um bestimme Einstellungen vorzunehmen. Desweiteren sind die Tasten nur einzeln zu bedienen. Auf der Rückseite des Mittelteils ist eine Vielzahl von elektrischen Verbindern angeordnet, die hinter Schutzklappen verborgen sind und die gegebenenfalls vom Benutzer mit technischen Kenntnissen identifiziert und durch Hochklapppen der Schutzabdeckungen zugänglich gemacht werden müssen. Wenn an die Steckverbinder elektrische Leitungen angeschlossen sind, kann das elektronische Buch aus dem Stand der Technik nicht mehr am Buchrücken nach der Art eines Buches gehalten oder auf eine Unterlage gelegt werden.

Der Erfindung liegt daher die Aufgabe zugrunde, ein digitales Buch der eingangs genannten Art zu schaffen, das gegenüber dem Stand der Technik trotz kompakter Bauweise zum einen eine wesentlich vergrößerte Anzeigefläche und zum anderen eine für den Computer-Laien leicht verständliche, benutzerfreundliche und einfache Handhabungsmöglichkeit bietet, um ihn in die Lage zu versetzen, umfangreiche Literatur, z. B. wissenschaftliche Werke, Enzyklopädien, oder auch schöngeistige Literatur lesen zu können, um dem Benutzer somit auch gegenüber einem herkömmlichen voluminöseren und schwereren Buch den Vorteil zu bieten, beliebig viele Seiten über beispielsweise nur zwei digitale Buchseiten in handlicher Form zumindest lesen und/oder gegebenenfalls bearbeiten zu können. Dabei sind die Lese- und Sehgewohnheiten der konventionellen Buch-, Zeitschriften- und Zeitungsleser zu berücksichtigen, die die möglichst irritationsfreie Betrachtung der angezeigten Publikationen bzw. Dokumenteninformationen erwarten und die sich durch eine zu sehr an der Computertechnik orientierenden Eindruck abstoßen lassen, z.B. hinsichtlich bestimmter Formen von Bedienelementen oder aufgrund sonstiger Überforderung, wie es oft bei älteren Menschen oder technischen Laien vorkommt, die die Nutzung eines elektronischen bzw. digitalen Buches ablehnen. Sicherzustellen ist dabei ein sicheres und ergonomisches Halten und Bedienen in unterschiedlichen Situationen, z.B. beim Gehen, beim liegen oder wenn sonst keine Auflagefläche vorhanden ist, sowie eine einfache und verständliche Handhabung bei minimalen oder fehlenden Vorkenntnissen oder beispielsweise bei einer Behinderung. Dabei soll eine unkomplizierte und gleichbleibende Bedienung trotz unterschiedlicher Anwendungsmöglichkeiten und vielfälltiger Aufgaben erzielt werden. Es wird bezweckt, eine schnelle und reduzierte Bedienung mit minimalen Haltungsänderungen beim Lesen zu ermöglichen.

Die der Erfindung zugrundeliegende Aufgabe wird gelöst durch die Gegenstände der unabhängigen Patenansprüche.

Vorteilhafte Weiterbildungen der Erfindung sind durch die in den Unteransprüchen angegebenen Merkmale gekennzeichnet.

Das digitale Buch gemäß der vorliegenden Erfindung ist vorteilhaft, da es eine reale Alternative zu einem herkömmlichen Buch darstellt, wobei in erster Linie die Seh- und Lesegewohnheiten des Benutzers vorausgesetzt werden und besondere technische (Computer-)Vorkenntnisse nicht erforderlich sind. Zudem wird gegenüber den bekannten Stand der Technik
a) die Lese- und/oder Bearbeitungsfläche durch die Bedienung mittels Rückseitiger Bedienelemente vergrößert,
b) Seiten ohne störende Elemente, z.B. Menüleiste, Icons, Bedienelemente etc. wie herkömmlichen Buchseite lesen zu können,
c) dieses Gerät ohne besondere Vorbereitungen in einer beliebige Situation und in beliebiger Körperstellung, z. B. im Falle einer Bettlägerigkeit des Benutzers, benutzen zu können.

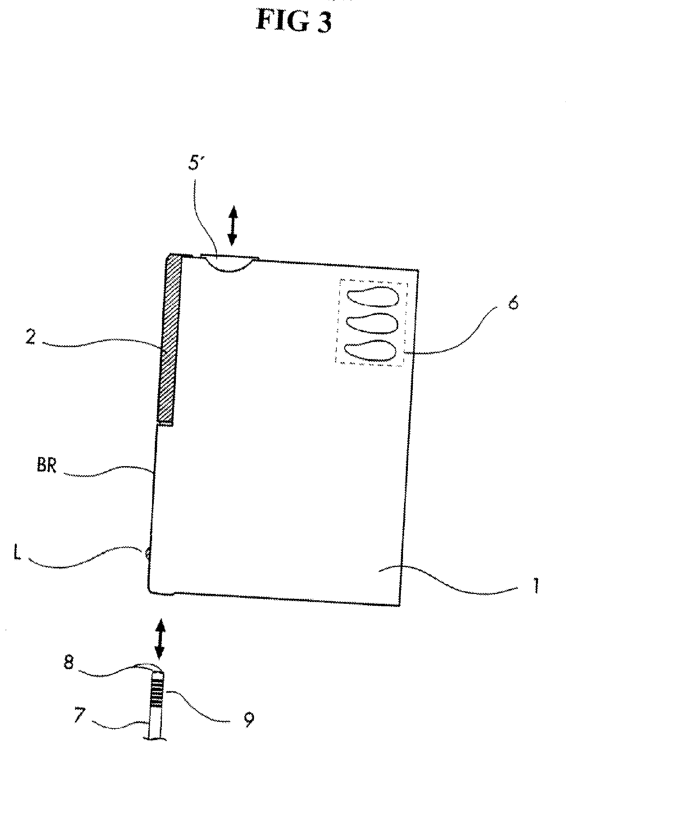

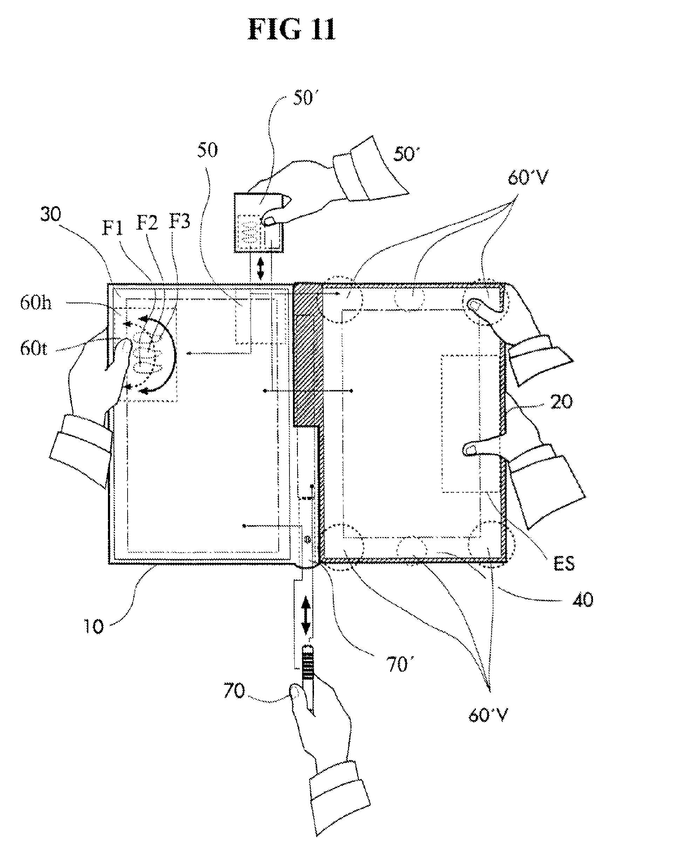

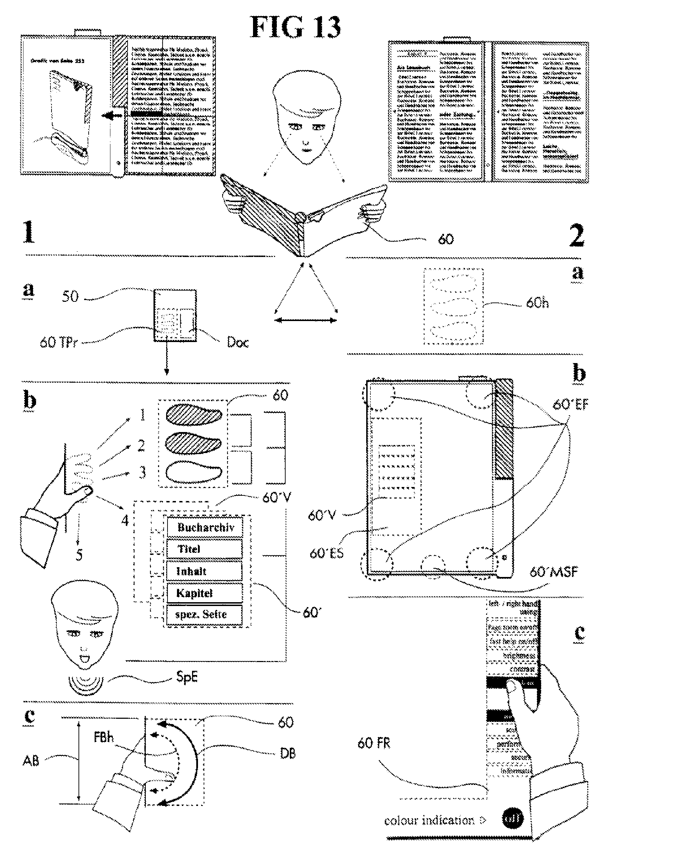

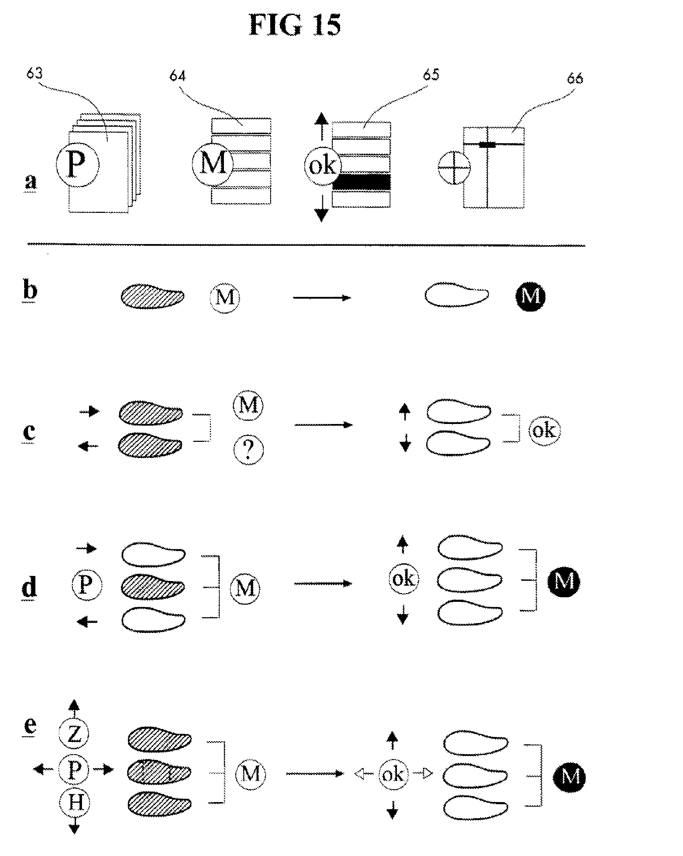

Im Greifhand-Aktionsbereich der haltenden Hand befindliche multifunktionale Eingabemittel (Fig 11 /60h), welche kombinierbar sind (Fig 13-19) und softwaregesteuert programmiert bzw. umgeschaltet werden können (Fig 13- 22) und vorzugsweise auf der Anzeigenfläche abgewandten Seite als Tasten ausgebildet sind, die mit den Fingern der haltenden Hand bedient werden (Fig 3,4,5,6,11,Fig 13-19), wobei Funktionen nur bei Bedarf angezeigt werden und am Rand behandelt werden ohne das Dokument zu stören (Fig 15a, 1621):
a) schnellere Ausführung von Bedienroutinen
b) Minimierung von Bewegung bzw. vermeidung von ständigen Haltungsänderung der Anzeigemittel haltenden Hand
c) Reduzierung des technischen Eindrucks und/oder Aufwandes bei größtmöglichen Nutzen bei geringstmöglichen Eingabeelementen
d) bessere Verteilung der Aufgaben auf die einzelnen Finger
e) Vergrößerung der vorderseitigen Anzeigenfläche
e) Flexibilität durch die zusätzliche Möglichkeit der Kombination mit anderen Eingabemitteln wie z.B. die Anzeigenläche und/oder reale Bedienelemente, welche auch mit der anderen Hand bedient werden können und/oder Spracheingabe
f) Erleichterung der Orientierung u.a.für Sehbehinderte und Blinde (vorausgesetzt ist selbstverständlich das Vorlesen der Buch-Informationen über einen Audioausgang)

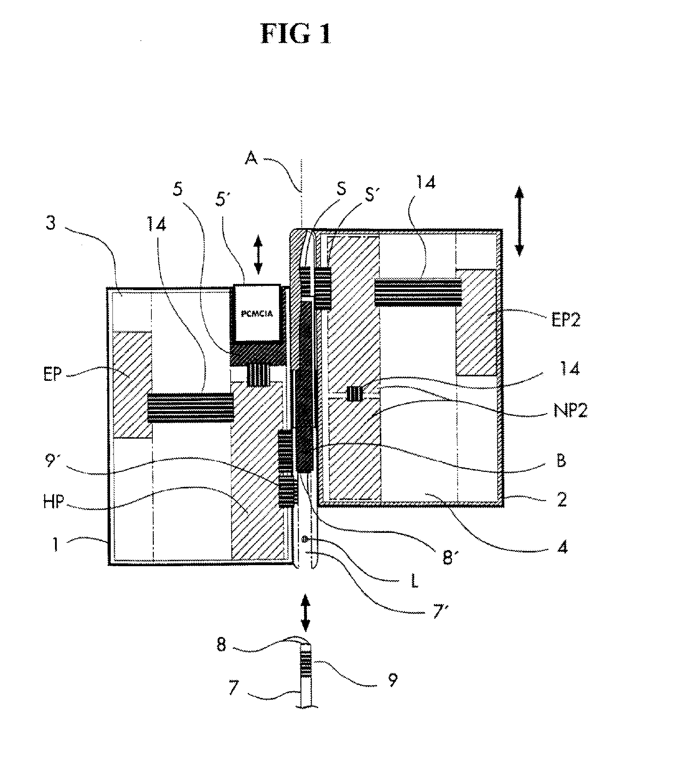

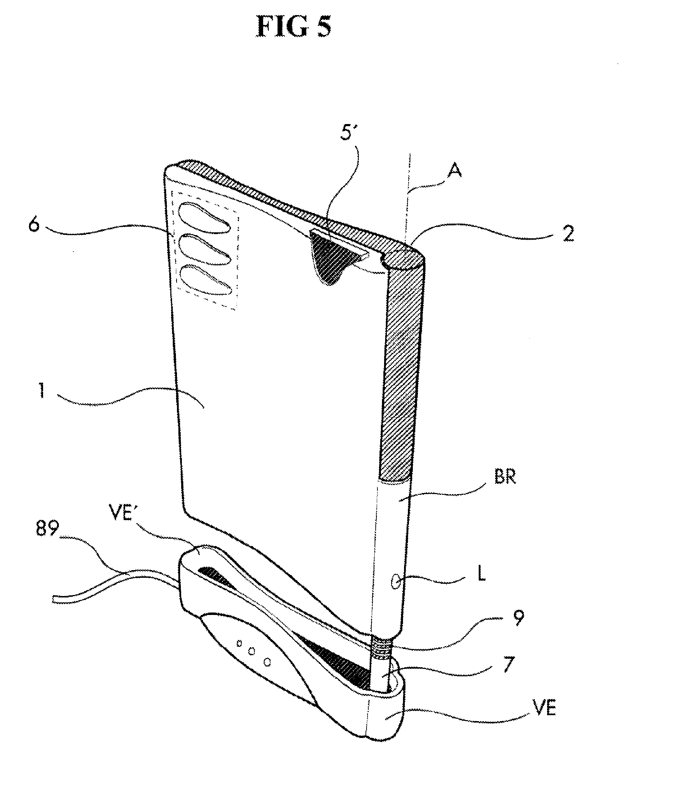

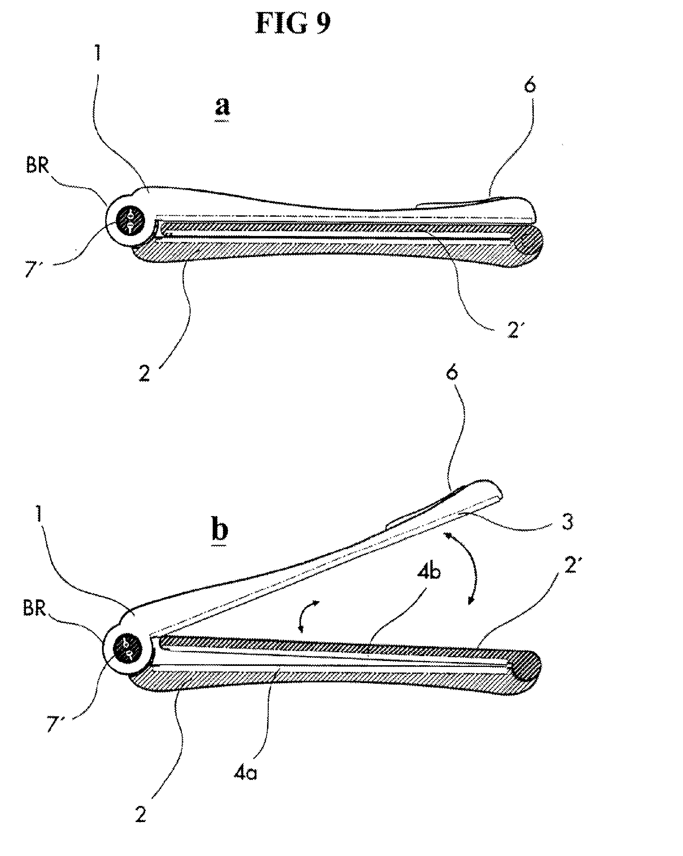

Auf der Unterseite des digitalen Buches befindlichen Benutzerschnittstelle (Fig 9), vorzugsweise im Drehgelenk einer zweiteiligen Anzeigeneinheit (Fig 1-6, 11), welches der Haltegriff einer einteiligen Anzeigeneinheit ist
, zur Kopplung mittels Kabelverbinder mit vorzugsweisen Klinkenstecker um unterschiedliche Vorrichtungen, Geräte und Einrichtung zu verbinden mit dem Buch wirksam zu verbinden (Fig 1,2,3,5,11,25,26) und/oder als Halterung für die Buchstation zu dienen (Fig 5) und das Digitale Buch mittels Signalübertragung mit Dateninformationen und/oder Energie zu versorgen (Fig 1):
a) unkompliziertes Anschließen
b) Vermeidung von Beschädigung bei unsachgemäßer Handhabung
c) Reduzierung der Schnittstellen und damit verbunden günstigere Herstellungskosten
d) Kabel- und Steckerfreier Buchrücken zum besseren ablegen auf z.B. Tischfläche oder Schoß
e) Nutzung sowohl für Kabelanschluß wie auch für den Haltestift der Versorgungsstation
f) günstigere Symethrie und Balance bei evtl. Zuglastentsteheung durch angeschlossene Versorgungskabel
g) geringere Irritation durch störende Kabel
h) Reduzierung des "technischen Eindruckes" beim Benutzer

Ergonomisch ausgeformte Anzeigenrückseite und Flexibilität
a) griffigeres, angenehmeres und sichereres Halten beim Bedienen und beim Transportieren
b) kompaktere Bauweise bei sinnvoller und optisch vorteihafter Unterbringung der erforderlichen Elektronik
c) Sollbiegestelle zur Erleichterung der Biegsamkeit (Flexibilität)
d) Schutz rückseitig /seitlich angebrachter Bedienelemente
e) Reduzierung des "technischen Eindruckes" beim Benutzer
f) geringere Verletzungsgefahr und leichter Transport

Das erfindungsgemäße digitale Buch kann vorteilhaft als leicht mitzuführendes Nachschlagemittel, z. B. als inhaltlich umfangreiche Straßenkarte, Wanderkarte o. ä. benutzt werden. Außerdem kann bei Bedarf umfangreiche Literatur ohne mühseligen Transport einer Vielzahl von herkömmlichen Büchern auf Reisen mitgeführt werden. Das digitale Buch eignet sich insbesondere auch als Nachschlagewerk an Orten, die keine große Bewegungsfreiheit bieten. Hier ist insbesondere das Cockpit eines großen Verkehrsflugzeuges zu erwähnen, in dem üblicherweise eine Vielzahl von Ordnern mit Prüf- und Bedienungsvorschriften mitzuführen sind. Besonders in Notsituationen ist es wichtig, betreffende Hinweise schnell ohne zeitaufwendiges Blättern auffinden zu können.

Ein herkömmliches Notebook o. ä. ist wegen dessen komplizierter Handhabung und der Anfälligkeit seines Diskettenlaufwerks z. B. bei Turbulenzen nur bedingt geeignet. Dies gilt im übrigen in hohem Maße für Benutzungställe in Privattlugzeugen.

Ein weiterer Vorteil besteht darin, daß mindestens zwei Bildschirme im Buchseitenformat (Hochformat) als ganze Seiten gelesen werden können, wobei die zumindest zwei Bildschirme voneinander verschiedene Funktionen erfüllen können. So ist es beispielweise möglich, einen Manuskripttext ganzseitig zu lesen und sich gleichzeitig auf dem Neben-Bildschirm Textpassagen auszugsweise anzeigen zu lassen, die vorher auf der Textseite markiert worden sind, oder es lassen sich andere Seiten des betreffenden (z. B. wissenschaftlichen) Buchtextes mit z. B. auf der Textseite erwähnten Illustrationen darstellen, ohne die aktuelle Buchseite damit zu überdecken oder wegzublenden. Außerdem lassen sich Querverweise, Nachschlagehinweise usw. durch markieren, beispielsweise durch antippen mittels des Bildschirmstiftes, des Quellenhinweises anzeigen, ohne "blättern" zu müssen.

Durch die Möglichkeit des Trennens der Bildschirme des digitalen Buches läßt sich ausgehend von einer Grundausführung desselben (die nur zum Lesen vorgesehen ist) der Neben-Bildschirm entsprechend dem Anforderungsprofil und dem Stand der Technik an die Bedürfnisse des Benutzers anpassen und somit das Leistungsspektrum des digitalen Buches erweitern. Beispielsweise kann der Neben-Bildschirm drucksensitiv ausgeführt sein, wodurch ein handschriftliches Beschreiben einer Bildschirmseite mittels Bildschirmstiftes ermöglicht wird, während der geschriebene Text quasi simultan in Druckbuchstaben und ggf. mit Hilfe einer Übersetzungstunktion der geladenen Software in einer anderen Sprache auf dem Haupt- Bildschirm dargestellt werden kann. Dies ermöglicht beispielweise ein schnelleres und bequemeres Erstellen und Bearbeiten von Geschäftsbriefen.

Digitales Buch mit einer ersten erfindungsgemäß, optimierten Benutzerschnittstelle zur Vereinfachung der Bedienung mit minimalen technischen informationen, mit zumindest einer auf einer rechten und/oder linken Seite des digitalen Buches befindliche Eingabeeinheit zur manipulation der angezeigten Informationen und/oder zur Bewirkung einer Betriebszustands- und/oder Einstellungsänderung und/oder zum laden von Dokumenteninformationen und/oder zum Umschalten in einen anderen Betriebsmodus, jedoch nicht darauf beschränkt, wobei das Haupt- Eingabeelemente bzw. Tastenelement(e) vorteilhafter weise auf der Anzeigenseite abgewanten Seite (60h) des Digitalen Buches derart im Greifrand angeordnet sind, dass Bedienhandlungen möglichst an einer Stelle, an der die Anzeigeneinheit (10) gehalten wird, mit den Fingern der Haltenden Hand ausgeführt werden können.

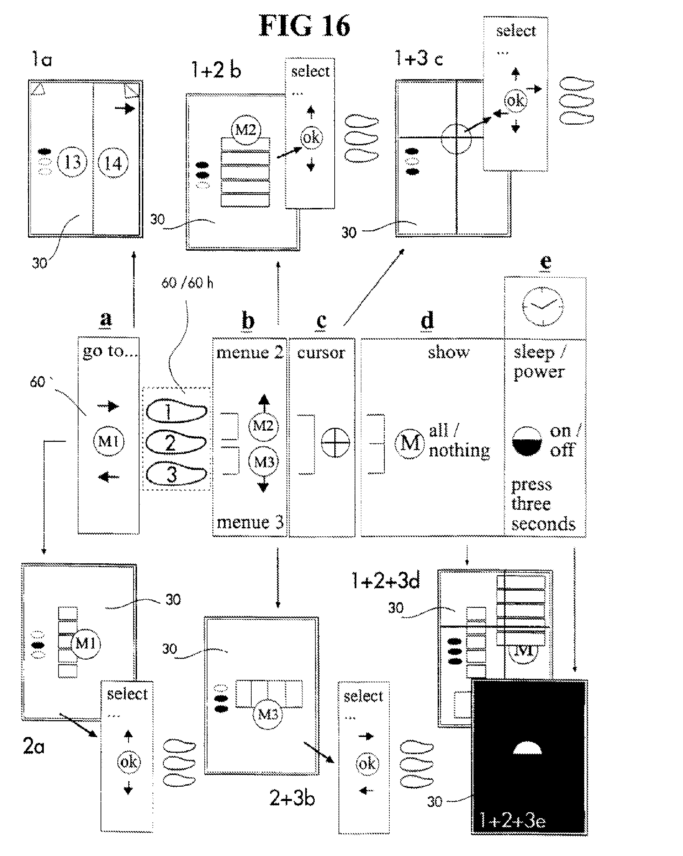

In Fig. 11 ist beispielhaft eine obere linke Position aufgezeigt, vorzugsweise ist eine Position auf der mittleren Seite einer Anzeigenseite vorgesehen, da die mittlere Position eine neutralere Ausgangsposition zur Bedienung darstellt, wie in späteren Figurenbeschreibung ersichtlich, wobei vorzugsweise drei-Kombinationstasten, welche vorzugsweise in den beispielhaften Figuren gezeigt sind, jedoch durch andere Bedienelemente ersetzt werden können, sofern diese zumindest teilweise Aufgaben mittels ihrer Eigenschaften erfüllen, wozu beispielsweise das selektieren und aktivieren einer auf der Anzeigenfläche angezeigten Information und/oder das Bewegen von Seiten und/oder zumindest die Möglichkeit, eine erste Information auf derAnzeigenfläche anzuzeigen und/oder eine erste bereits angezeigte Information z.B. durch deaktivieren einer Aktivierungssperre (ES) zur Bedienung über irgend eine dafür vorgesehene Eingabe z.B. über Touch-Screen vorzugzweise ebenfalls im seitlichen Greifrandbereich der Anzeige (20) freizugeben. Es ist offengelassen ob nur reale Bedienelemente und/oder in Kombination mit einer sensitiven Anzeigenfläche und/oder in Kombination mit Sprache bedient wird, da es in erster Linie davon abhängt, (in Figuren 16-19 gezeigt) wie die Eigenschaften des Anzeigemittels geplant sind, z.B. als Touch-Screen oder als reines Anzeigen-Display. Grundsätzlich können auch andere Bedienelemente an anderer Stelle der Anzeigeneinheit angebracht sein ohne den Schutzumfang zu beeinflussen.

Die Bedienelemente sind in unterschiedlicher Ausführung und Anordnung vorgesehen. Das Bedienfeld kann beispielsweise auch mit Slide-Pad und/oder Track-Ball und/oder einer Mehrfunktionstaste etc ausgestattet sein oder die entsprechenden Tastenfelder als Induktionsfelder bzw. Schalter ausgebildet sein.

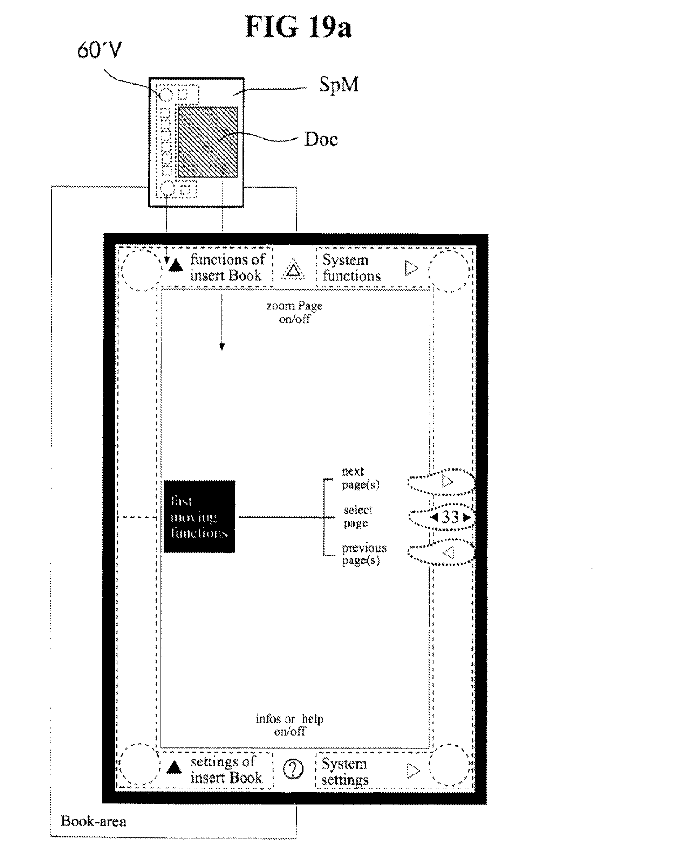

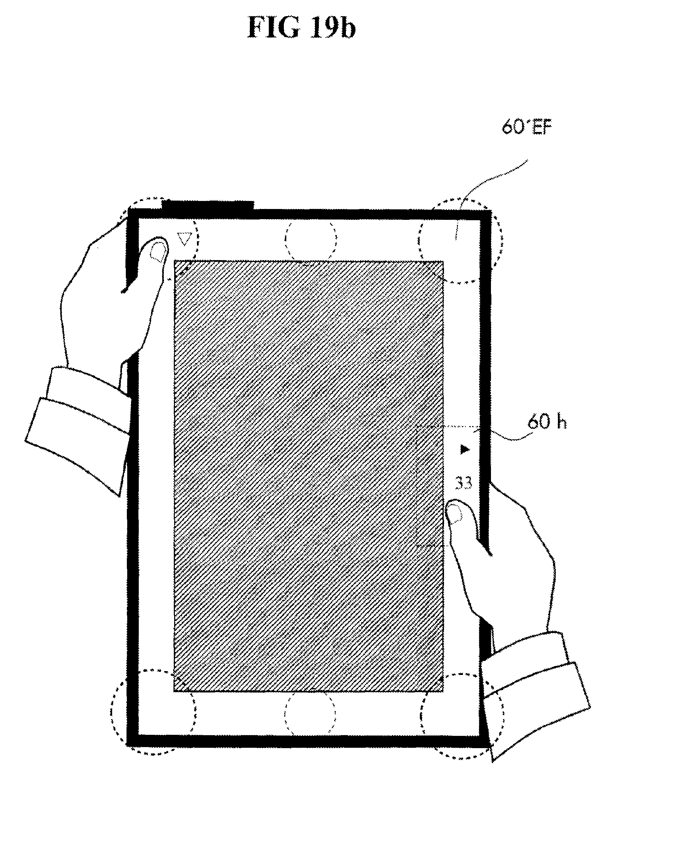

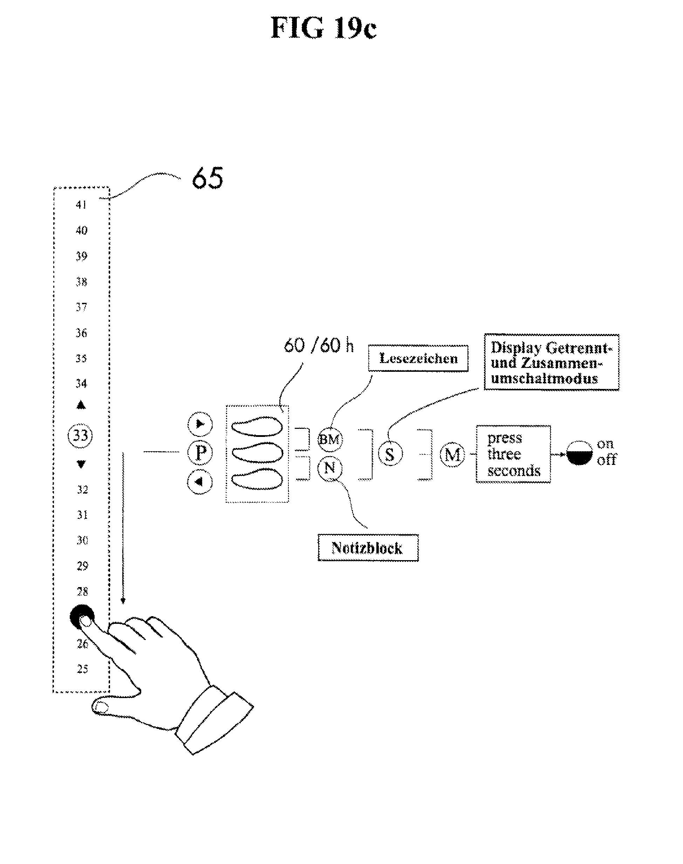

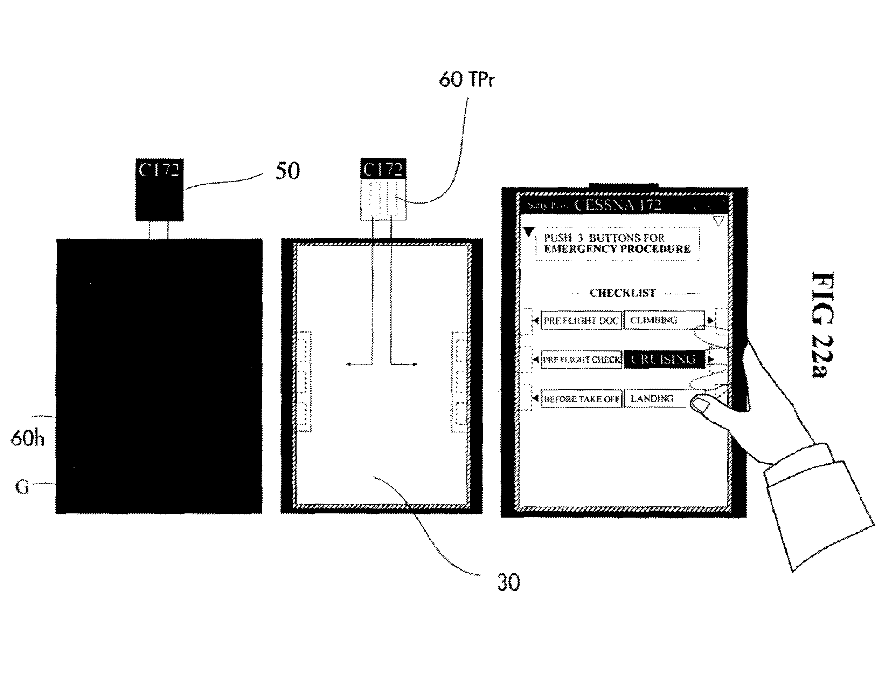

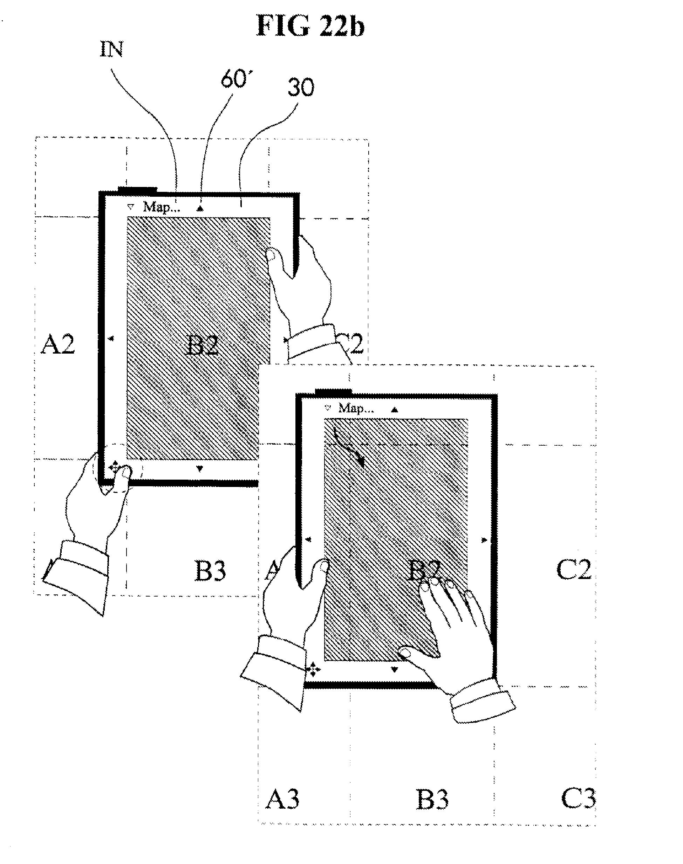

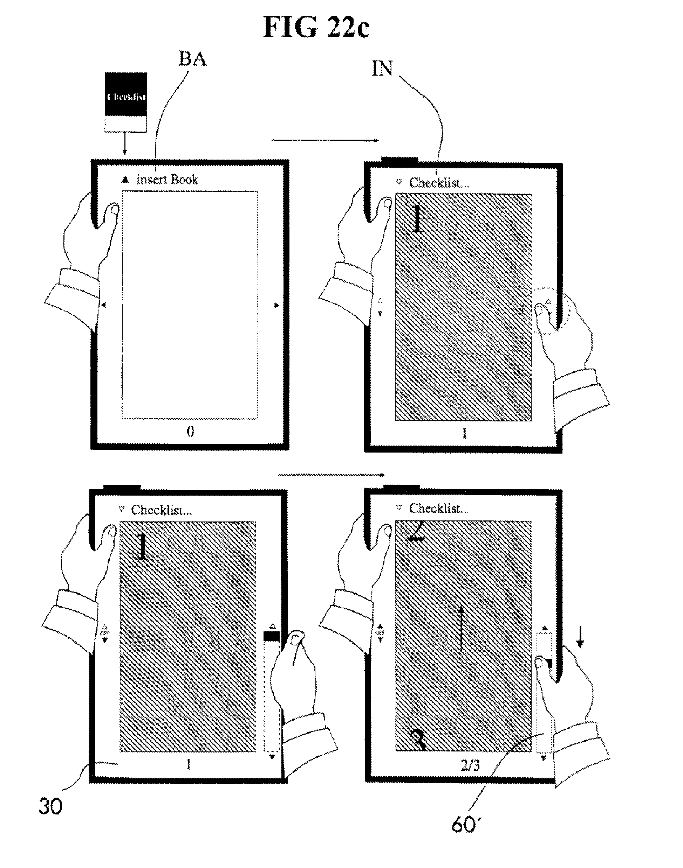

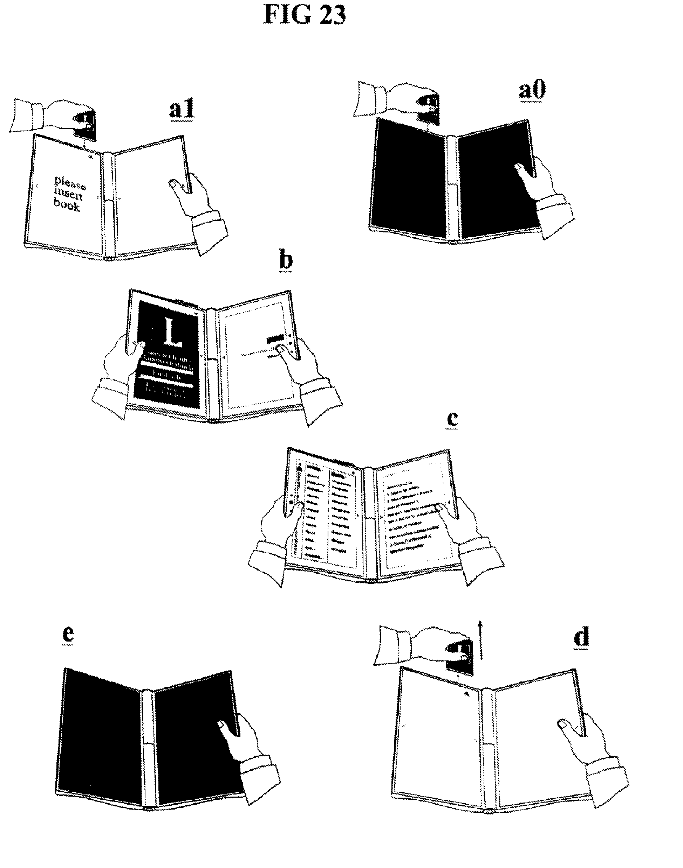

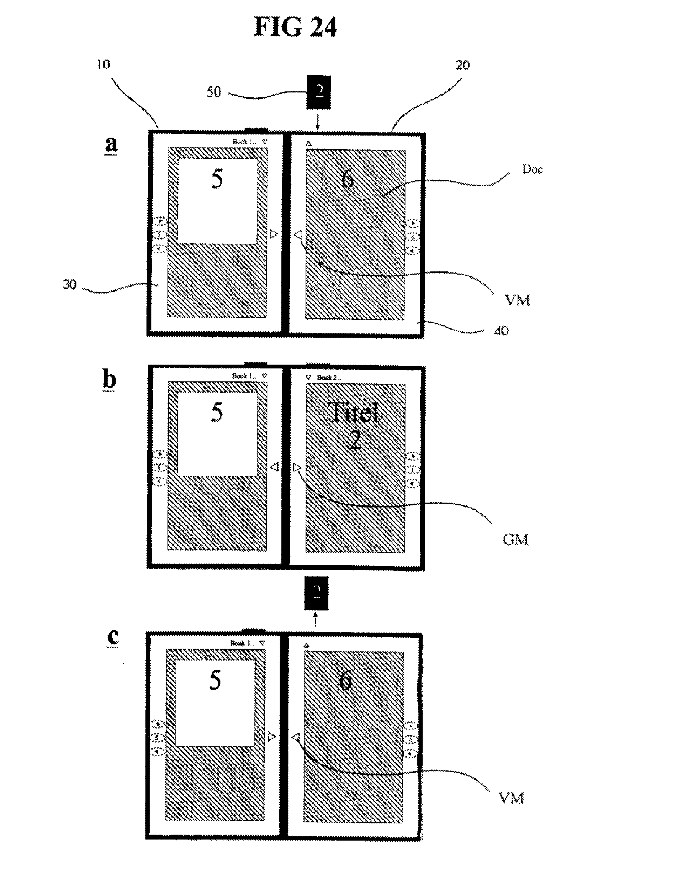

Digitates Buch mit einer weiteren erfindungsgemäß, optimierten Benutzerschnittstelle zur Vereinfachung der Bedienung mit minimalen technischen informationen, mit zumindest einer oder mehreren sensitiv ausgebildeten Anzeigefläche(n) über die mittels berühren einer beliebigen jedoch vorher festgelegten Stelle, eine erste Bedieninformation einer unsichtbaren Funktionsauswahl bzw. Bedieninformation bereitgestellt, d.h. angezeigt wird, die weiter zu bedienen sind. Dies geschieht vorzugsweise mittels identifizierung einer Funktionsauswahl bzw. anzuzeigenden Funktionsgruppe über eine festgelegte Positionsinformation (60'V), welche beispielsweise eine erste Ecke der Anzeigenfläche bietet und/oder eine mittlere Seite der Anzeigefläche. Vorzugsweise ist vorgesehen eine vielzahl irritierender und störender Funktionen bzw. Bedieninformationen welche auf der Anzeigenfläche zur Bedienung dargestellt werden sollen, im normalen Lesemodus ausgeblendet bzw. unsichtbar zu halten und nur bei Bedarf entsprechende Funktions- bzw. Bedieninformationen zur Verfügung zu stellen, wobei entweder alle Funktionen auf einmal oder eine Funktionsgruppe getrennt von zumindest einer weiteren Funktionsgruppe sichtbar gemacht, d.h. bereitgestellt werden kann, um diese zu Bedienen. Der Vorteil ist eine irritationsfreie bzw. ungestörte angezeigte Dokumentenseite ähnlich eines Buches (Anschaungsbeispiele bieten die Figuren 19,20,21) Eine weitere vorteilhafte Weiterbildung, jedoch nicht dadurch beschränkt, welche das Einrichten von Funktionen- bzw. Bedieninformationen durch ein initialisiertes Dokument bewirkt, ergibt die Möglichkeit die Anzeigenfläche in Bereiche zu teilen, die es dem Laienanwender ermöglicht hinsichtlich spezieller Funktionen der angezeigten Puplikation, eine sinnvolle Bedienung vorzunehmen, wenn z.B. ein gekoppelter Speicher mit Dokumenteninformationen (50') alle zur Bedienung dieses Dokumentes notwendigen Funktionen bzw. Bedieninformationen in der Anzeigeeinheit an der Stelle unsichtbar zur Verfügung stellt, an der sich der gekoppelte Speicher befindet. So hat der Laienanwender die Möglichkeit, nur die Bedieninformationen anzufordern, die unmittelbar mit dem initialisierten Dokument in Verbindung stehen. Digitates Buch mit einer weiteren erfindungsgemäß, optimierten Benutzerschnittstelle zur Vereinfachung der Bedienung mit minimalen technischen Informationen, mit zumindest einer ersten vorzugsweise im oberen Teil des Digitalen Buches vorgesehen Festkörperkopplunksvorrichtung (50), vorzugsweise für eine Speicherkarte (50'), jedoch nicht darauf beschränkt, welche mittels Kopplung vorzugsweise durch einschieben des Festkörperelementes einen oder mehrere Prozesse im digitalen Buch auslöst, die eine Bedienung von Seiten eines Laien insofern erleichtert, dass z.B. der Inhalt des gekoppelten Festkörpers ohne weiteres zutun des Anwenders bestrebt ist, die Aufgabe des, mit beispielweise einschieben des Körpers (50') in die dazu ausgebildete Aufnahmeöffnung (50), bezweckte Vorhaben auszuführen. Beispielsweise wird der Inhalt einer Speicherkarte mit Buchinformationen ohne weitere Handlung durch den Anwender nach erfolgreicher Koppelung angezeigt, oder zumindest eine erste Information zur Verfügung gestellt die vom Anwender nur verifiziert werden muß (Fig 24). Die dazu notwendige Aufforderung zur Initialisierung kommt dabei vorzugsweise vom digitalen Buch, nach identifizierung des gekoppelten Festkörpers. Hierzu kann die bereits bekannte plug and play technologie eingesetzt werden, um die Erkennung des Festkörpers zu gewährleisten (Siehe dazu auch Figur 22 oder Figur 23).

Eine weitere vorteilhafte erfindungsgemäße Einrichtung zur einfachten Bedienung mit minimalen technischen informationen, mittels Kopplung eines oder mehrer Festkörper mit dem erfindungsgemäßen digitalen Buch ist, dass diese Festkörperelemente Software- und/oder Hardwarebestandteile wie z.B. Elektronik (integrierte Schaltkreise, Batterie, Speicher, Sender und/oder Empfänger für kabellose Informationsübertragung, etc) enthalten, die in irgend einer Form in vorbenannter Art, vorzugsweise ohne weiteres zutun des Anwenders, das Leistungsspektrum hinsichtlich der anzuzeigenden Information, welche über das Festkörpermittel in das digitale Buch gelangt, erweitert und/oder Bedienfunktionen übernimmt, die der Anwender durch eine fehlende alphanummerische Tastatur nicht oder nur eingeschränkt ausführen kann.

Eine weitere vorteilhafte Einrichtung zur einfachen Bedienung mit minimalen technischen informationen, mittels Kopplung eines oder mehrer Festkörper mit dem erfindungsgemäßen digitalen Buch ist das mit der Kopplung eines Festkörperspeichers mit dem digitalen Buch bewirkte selbsttätige Einrichten und/oder Einstellen des Digitalen Buches beispielsweise durch die Programmierung der Funktionstasten des digitalen Buches zur optimalen Bedienung des auf dem Festkörperspeicher gespeicherten Dokumentes (Fig 22) und der entsprechenden Bedieninformationen und/oder beispielsweise das automatische Umschalten von einem Anzeige-Getrennt Betriebsmodus in einen Anzeige-Verbund Betriebsmodus und umgekehrt, vorzugsweise selbstätig durch koppeln und/oder entkoppeln eines ersten und/oder zweiten Festkörperspeicher mit anzuzeigenden Dokumenteninformationen (Fig 23)

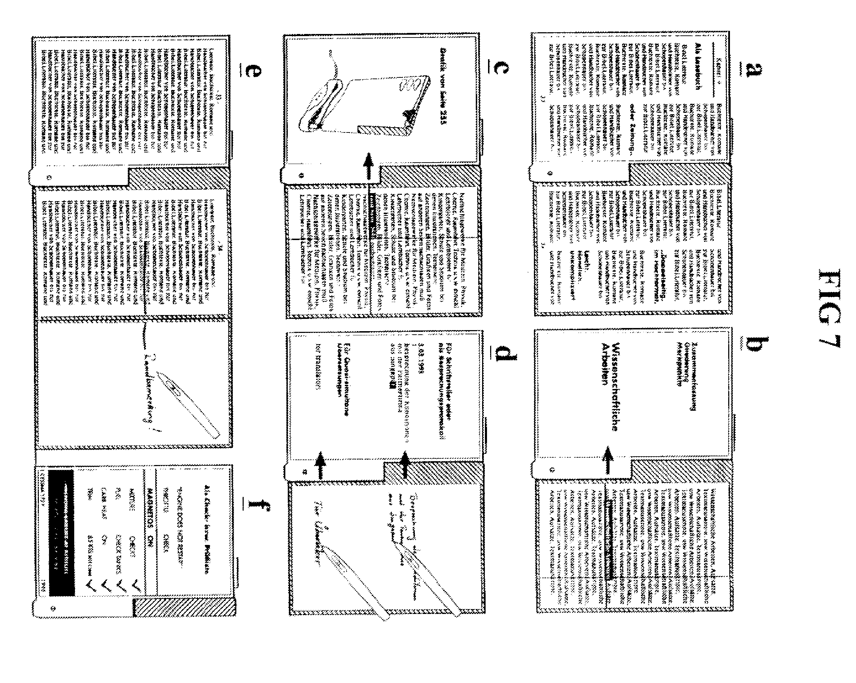

Digitates Buch mit einer weiteren erfindungsgemäß, optimierten Benutzerschnittstelle zur Vereinfachung der Bedienung mit minimalen technischen informationen, ist die Kopplung mittels Kabelverbindern über vorzugsweise nur eine Schnittstelle auf der unteren Seite des digitalen Buches (70'), vorzugsweise Im Buchdrehgelenk bei zweiteiligen oder mehrteiligen Anzeigeteilen, welche bei einteiligen Anzeigenteilen der Haltegriff ist, zum Aufnehmen beispielsweise eines Klinkensteckers (70'). Dieses hat den Vorteil das die Schnittstelle robust, und unkompliziert zu bedienen ist, und die für den Kontakt notwendigen Kontaktstellen auf beliebiger länge des Klinkensteckers untegebracht werden können, da der Einschub nicht durch die konstruktionsbedingte bauliche Tiefe des digitalen Buches behindert wird. Die vorzugsweise nur eine Schnittstelle ist derart ausgebildet, das die Elektronik des digitalen Buches mittels Signale zur Übertragung von Daten beispielsweise bidirektional und seriell und/oder Energie wirksam mit unterschiedlichsten Geräten, Einrichtungen oder Vorrichtungen verbunden werden kann. Hierzu können unterschiedliche Peripheriegeräte gekoppelt werden, wie z.B. Drucker und/oder Telefon und/oder Modem und/oder PC's und/oder Laptops und/oder Ladegeräte welche nur beispielhaft sind. Hierzu braucht der Laienanwender ledeglich das entsprechende Kabelverbinder einzustecken und eventuell soweit vorgesehen zu arretieren. Eine weiter Funktion dieser Schnittstelle ist die Aufnahme des Führungs- und Versorgungsstiftes der Buchstation, welche die Aufgabe hat das digitale Buch mit Energie und/oder Dateninformationen zu versorgen, welches beispielsweise je nach Ausführungsform an der Buchstation oder im digitalen Buch einzustellen ist. Gleichermaßen dient dieser Versorugungstecker als Stabilisierungsstift (Fig 5/7) des hochkant aufzusteckenden digitalen Buches, als zweiteilig ausgebildetet Buch im geschlossenen Zustand und/oder als einteiliges Buch über die im Haltegriff integrierte Schnittstelle im offenen Zustand (nicht gezeigt).

Im folgenden werden Ausführungsbeispiele der Erfindung anhand mehrerer Figuren im einzelnen beschrieben.
Fig. 1 zeigt eine schematische Draufsicht eines Anzeigenteile-koppelbaren Ausführungsbeispieles mit zwei Anzeigenteilen des erfindungsgemäßen digitalen Buchs im aufgeklappten Zustand des Buch-Gehäuses mit schematisch angedeuteten Einbauten und Zusatzelementen für das digitale Buch einschließlich der Trennungs- und Verbindungsmöglichkeiten der wesentlichen Teile desselben.

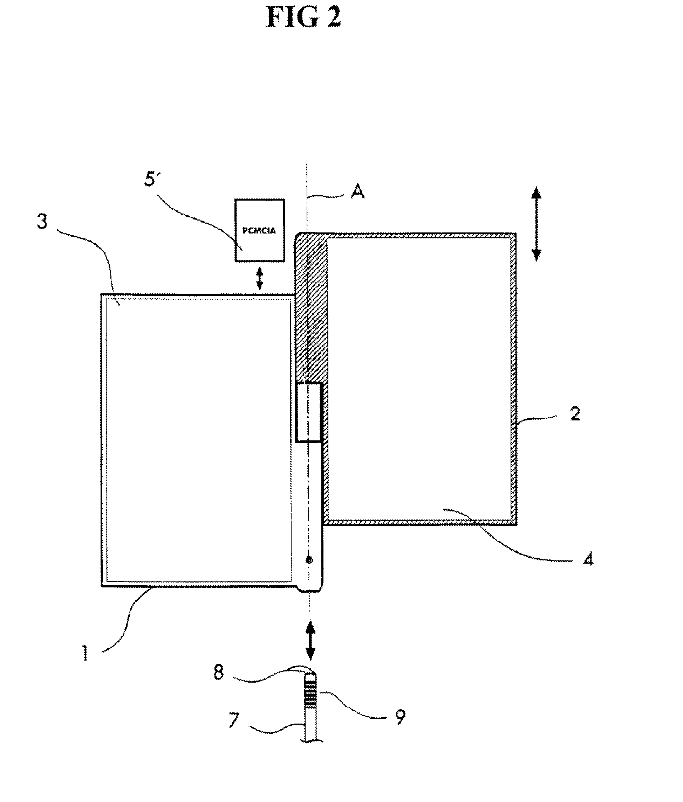

Fig. 2 zeigt eine vereinfachte schematische Draufsicht des Anzeigenteile-koppelbaren Ausführungsbeispieles mit zwei Anzeigenteilen des Erfindungsgemäßen digitalen Buches im aufgeklappten Zustand des Buch-Gehäuses und Zusatzelemente desselben, ähnlich der in Fig. 1 gezeigten Darstellung.
Fig. 3 zeigt eine schematische Seitenansicht eines festverbunden und/oder des Hauptteils des Anzeigenteile- koppelbaren Ausführungsbeispieles mit zwei Anzeigenteilen des digitalen Buches und vorzugsweise aneinanderliegende Kombinationstasten-Elemente im Greifrandbereich zur Bedienung desselben.

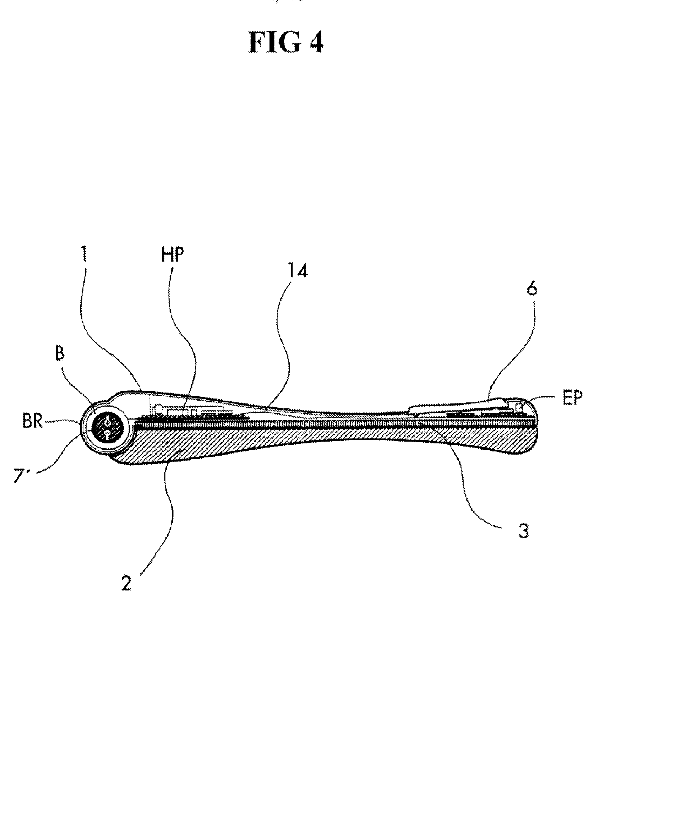

Fig. 4 zeigt teilweise im Schnitt eine Bodenansicht des festverbunden und/oder des Anzeigenteile- koppelbaren Ausführungsbeispieles mit zwei Anzeigenteilen des geschlossenen erfindungsgemäßen digitalen Buches zur Benutzung der vorzugsweise aneinanderliegenden Kombinationstasten-Elemente im Greifrandbereich zur Bedienung z.B. durch einen Linkshänder u/o Rechtshänder wenn z.B. eine beschreibbare Anzeigenfläche auf der rechten Seite des digitalen Buches angeordnet ist.
Fig. 5 zeigt eine perspektivische Ansicht des festverbunden und/oder des Anzeigenteile-koppelbaren Ausführungsbeispieles mit zwei Anzeigenteilen des Erfindungsgemäßen digitalen Buches in geschlossenem Zustand zur Benutzung der vorzugsweise aneinanderliegenden Kombinationstasten-Elemente im Greifrandbereich zur Bedienung und eine perspektivische Ansicht einer Versorgungseinheit.

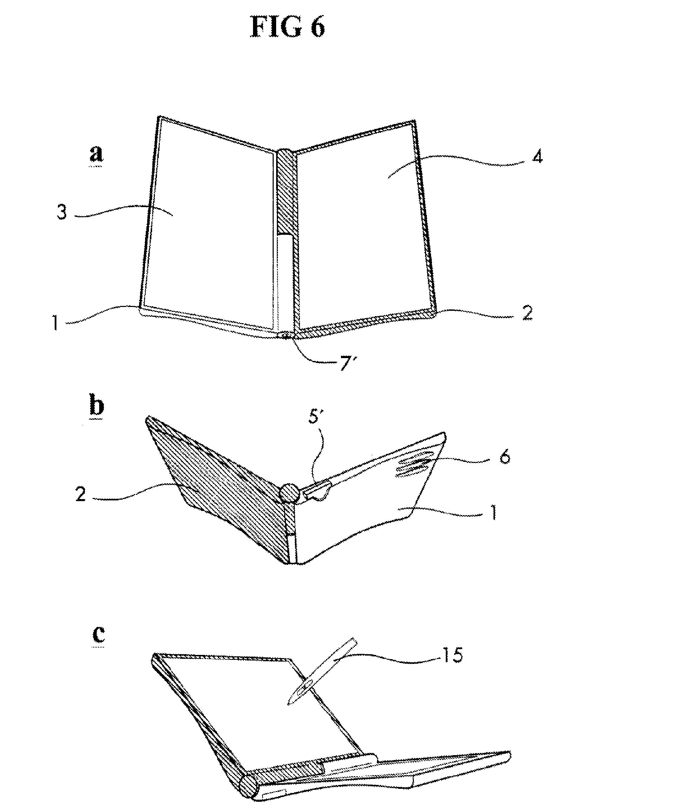

*Fig. 6a, Fig.* 6b u. Fig. 6c zeigen verschiedene perspektivische Ansichten im "aufgeschlagenen" Zustand eines festverbundenen und/oder eines Anzeigenteile-koppelbaren Ausführungsbeispieles des erfindungsgemäßen digitalen Buches mit zwei Anzeigenteilen, zum Lesen und/oder Beschreiben einer beschreibbaren Anzeigenfläche,
Fig. 7a, Fig. 7b, Fig. 7c, Fig. 7d, Fig. 7e . Fig.7f zeigen verschiedene Darstellungen, jedoch nicht darauf beschränkt, des festverbunden und/oder des Anzeigenteile-koppelbaren Ausführungsbeispieles mit einem, zwei und drei Anzeigenteilen des erfindungsgemäßen digitalen Buches in verschiedenen Benutzungsfällen, aus welchen Darstellungen verschiedene Vorteile des digitalen Buches ersichtlich sind.

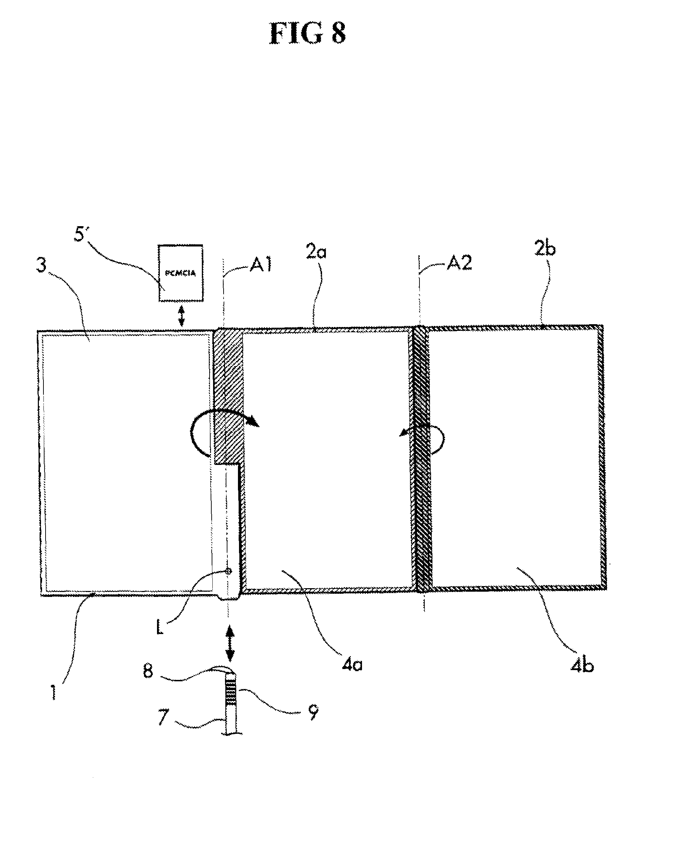

Fig. 8 zeigt die Darstellung einer Aufbaumöglichkeit des Neben-Teils eines Anzeigenteile-koppelbaren Ausführungsbeispieles des Erfindungsgemäßen digitalen Buches in Form eines Doppelbildschirms ähnlich einem Faltplan oder einem Terminplaner im "aufgeschlagenen" Zustand des digitalen Buches für einen Benutzungsfall mit drei Bildschirmen.
Fig. 9a. Fig. 9b zeigen Darstellungen der selben Ausführungsform, wie sie in Fig. 8 gezeigt ist, im zusammengefalteten oder "zugeschlagenen" Zustand des digitalen Buches.

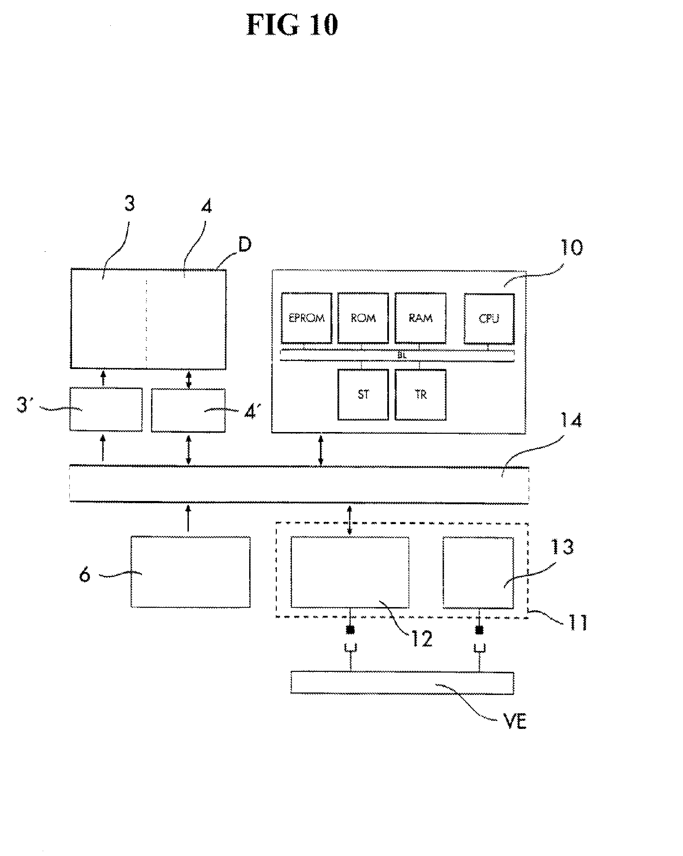

Fig. 10 zeigt ein beispielhaftes jedoch nicht auf dieses beschrängte Blockschaltbild des Anzeigenteile- koppelbaren Ausführungsbeispieles des Erfindungsgemäßen digitalen Buches einer Konfiguration von Einheiten und Bausteinen zum Betrieb des digitalen Buches.
Fig. 11 zeigt die Darstellung des festverbunden und/oder Anzeigenteile-koppelbaren Ausführungsbeispieles mit zwei Anzeigenteilen des erfindungsgemäßen digitalen Buches, jedoch nicht darauf beschränkt, und die der Erfindung zu Grunde liegenden optimierten Benutzerschnittstellen zur einfachen Bedienung durch einen Laienanwender, und zur reduzierung von technischen Informationen.

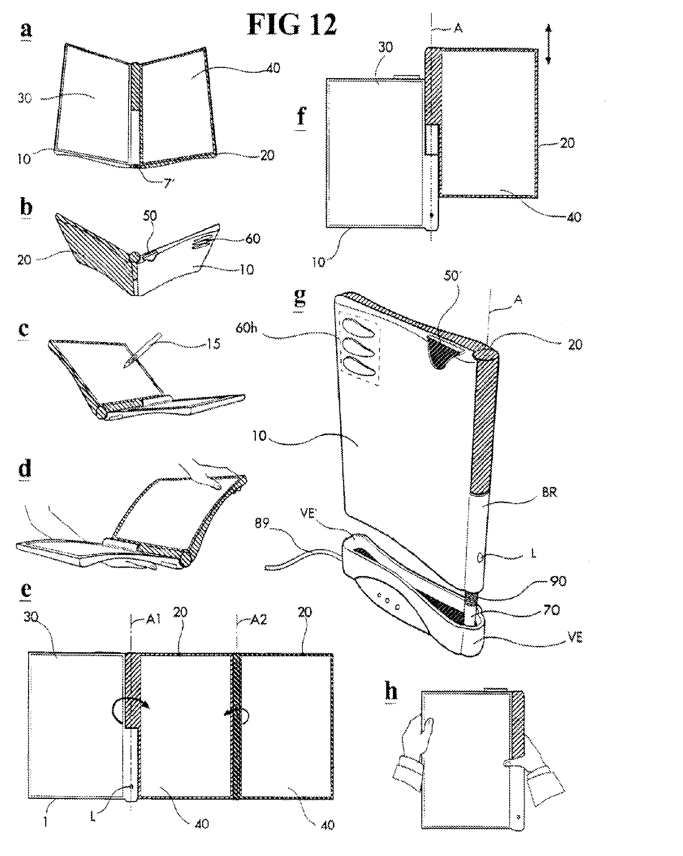

Fig. 12 zeigt die Darstellung unterschiedlicher Erscheinungsformen des erfindungsgemäßen digitalen Buches, jedoch nicht darauf beschränkt, als ein- oder mehrteiliger, festverbundener oder Anzeigenteile- koppelbarer Ausführung.
Fig. 13 zeigt die des erfindungsgemäßen digitalen Buches zu Grunde liegenden Teilaspekte zur Optimierung d.h. zur Vereinfachung der Bedienung bei gleichzeitiger Reduzierung von irritierenden Informationen und/oder technischen Ausbildungen

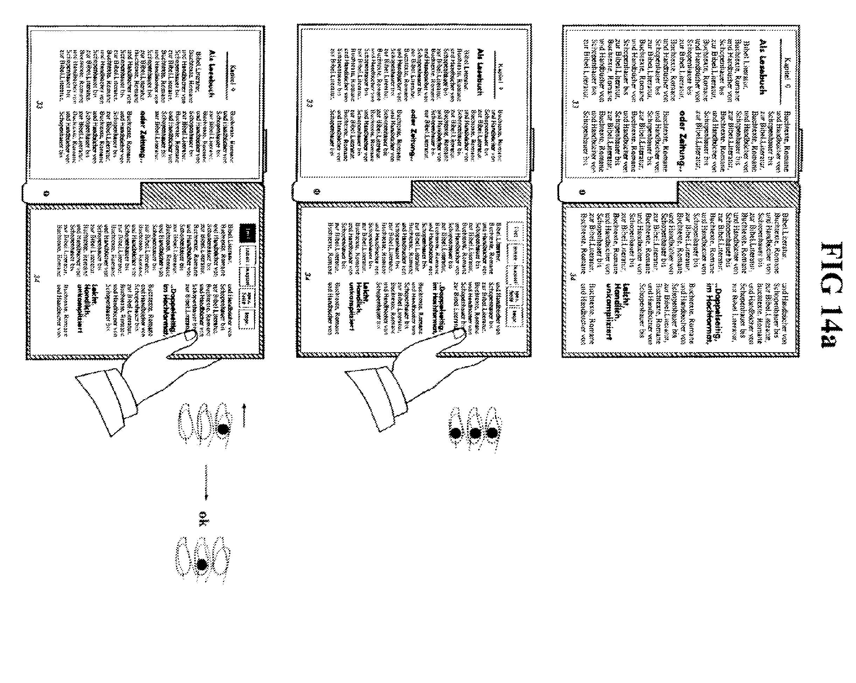

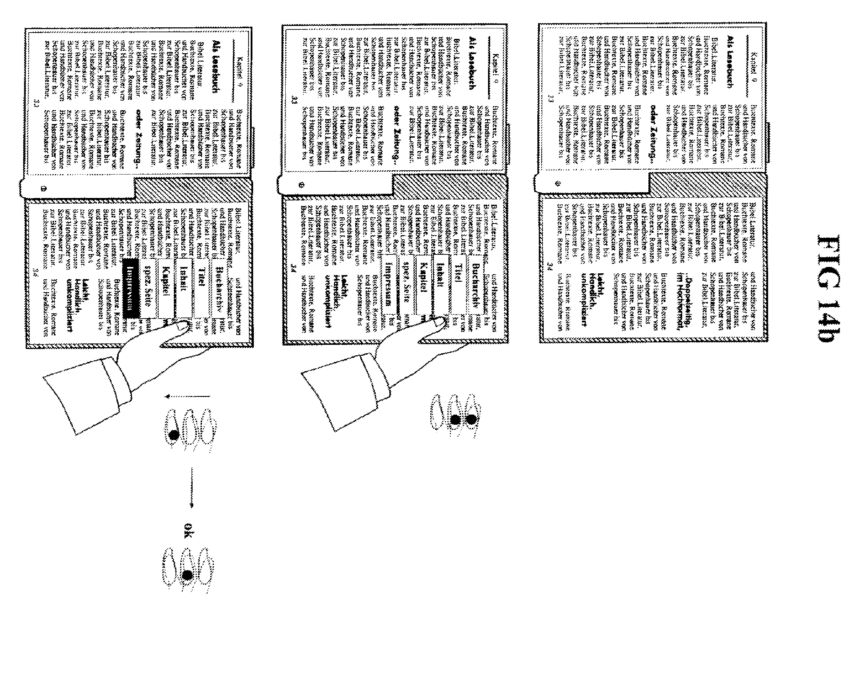

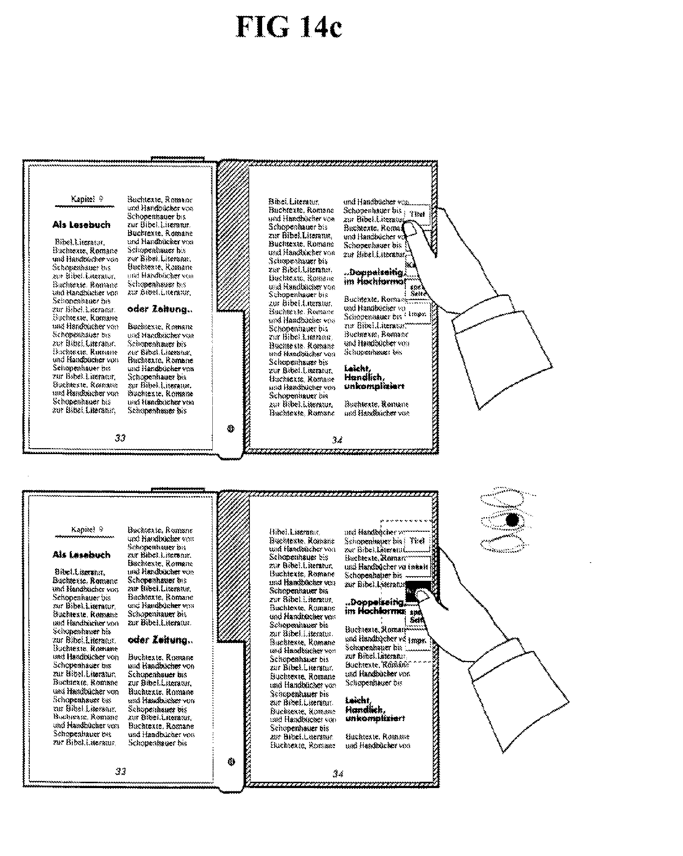

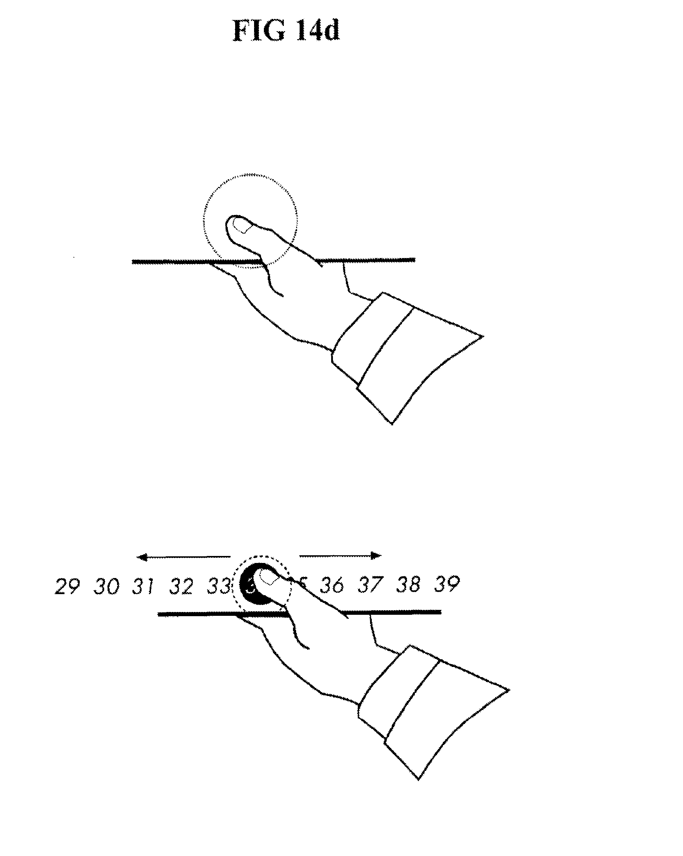

Fig. 14 zeigt am Beispiel eines aufgeschlagenen, zweiteiligen erfindungsgemäßen digitalen Buches, jedoch nicht darauf beschränkt, eine Bereitstellung von Bedien-Informationen und deren Weiterbedienung mittels der Anzeigenfläche abgewandten Bedienelemente und/oder mittels der Eingabe über eine sensitive Eingabefläche, und die Bereitstellung einer ersten Funktionsinformation sowie Weiterbedienung über die sensitive Eingabetläche.
Fig. 15 zeigt Funktionsmöglichkeiten einer Minimalkonfiguration von Bedienelementen des erfindungsgemäßen digitalen Buches, mit einer ersten Funktion zur Ausführung einer ersten Aufgabe, am Beispiel des Bereitstellens einer Auswahl-Information auf der Anzeigefläche und der nach der ersten Bedienung folgenden selbsttätigen und softwaregesteuerten Umprogrammierung der Bedienelemente zur Erfüllung einer zweiten Aufgabe, z.B. dem selektieren und/oder aktivieren einer ausgewählten Funktion oder dem Ausschalten der Bereitstellung.
Fig. 16 zeigt die generelle Kombinationsmöglichkeit eines Eingabefeldes des erfindungsgemäßen digitalen Buches, am Beispiel von drei realen Bedienelementen und deren Programmierung hinsichtlich einer ersten Funktion und durch Kombinationsbedienung möglichen weiteren ersten Funktionen, sowie der selbstätigen softwaregesteuerten Umprogrammierung der Bedienelemente durch einen ersten Bedienschritt, zur Erfüllung einer anderen Aufgabe in einem zweiten Bedienungsschritt.

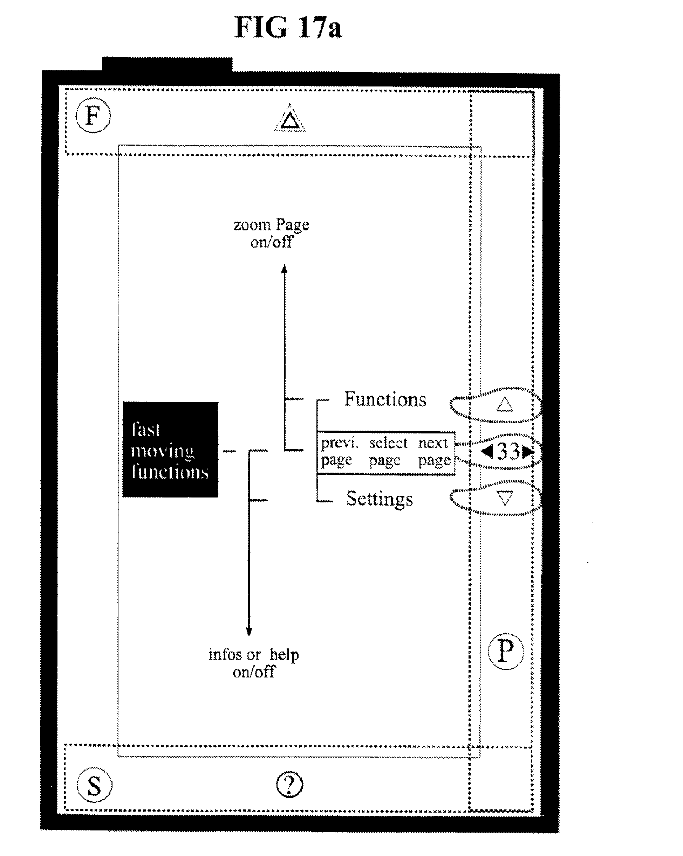

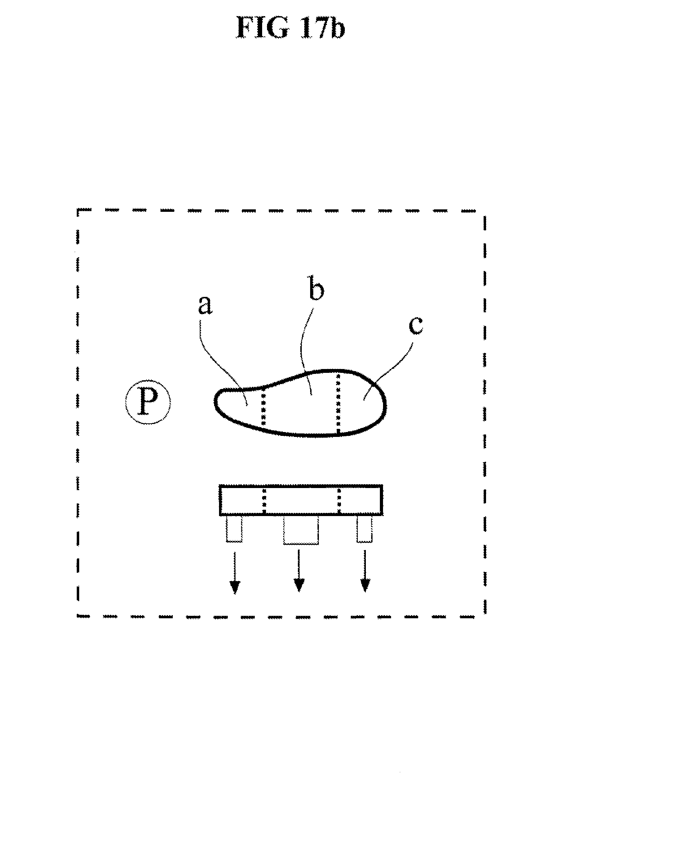

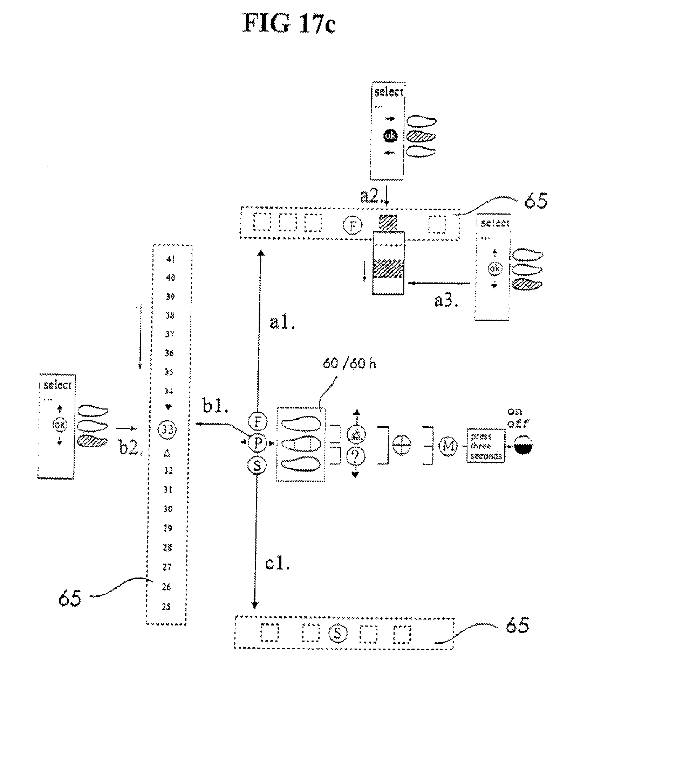

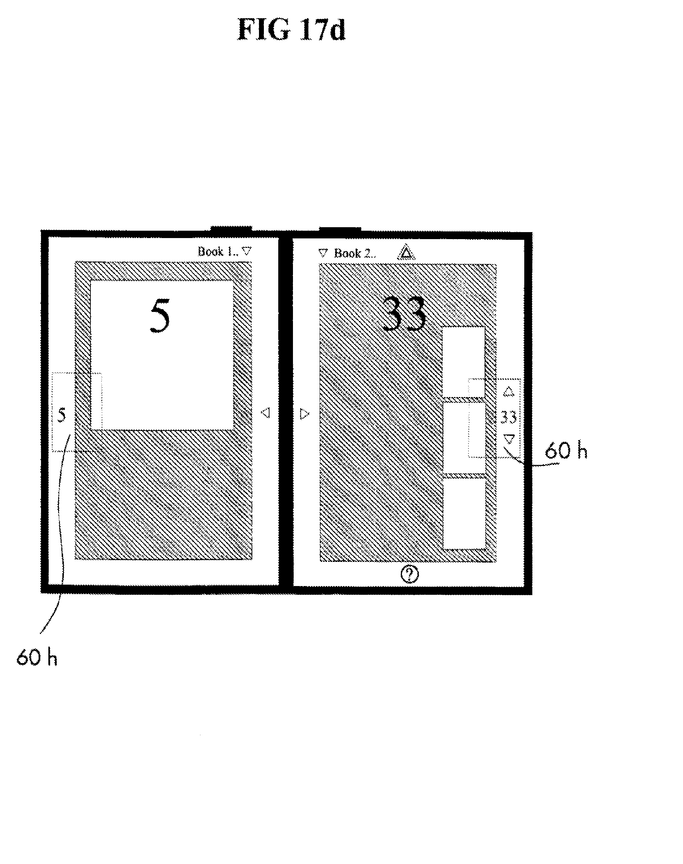

Fig. 17 zeigt am Beispiel eines ein-/ und zweiteiligen Anzeigeteils des erfindungsgemäßen digitalen Buches, die Programmierung der vorzugsweise rückseitig angeordneten, drei Bedienelemente für ein digitales Buch, bei welchem eine Bedienung nur über reale Bedienelemente bewerkstelligt wird.

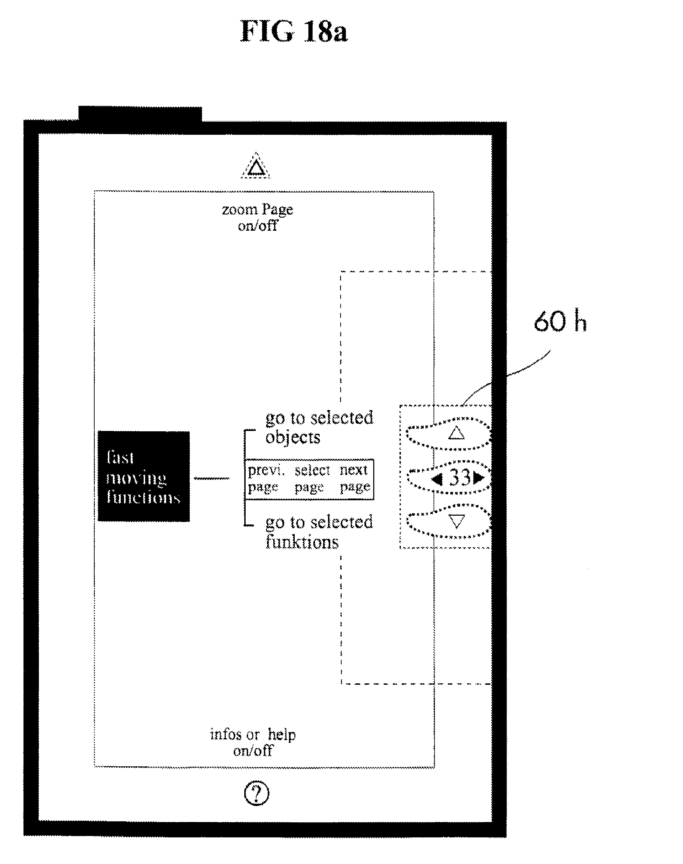

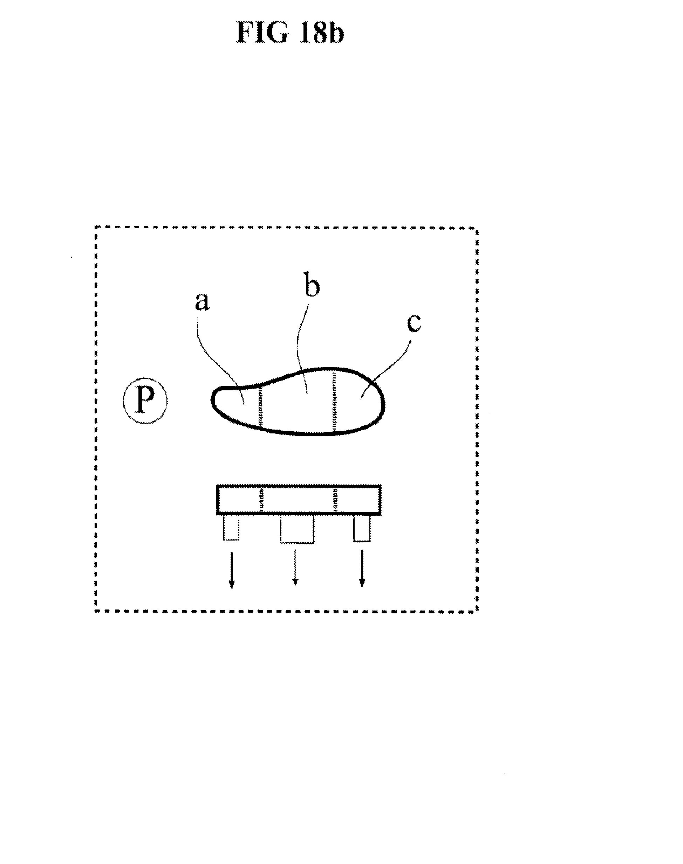

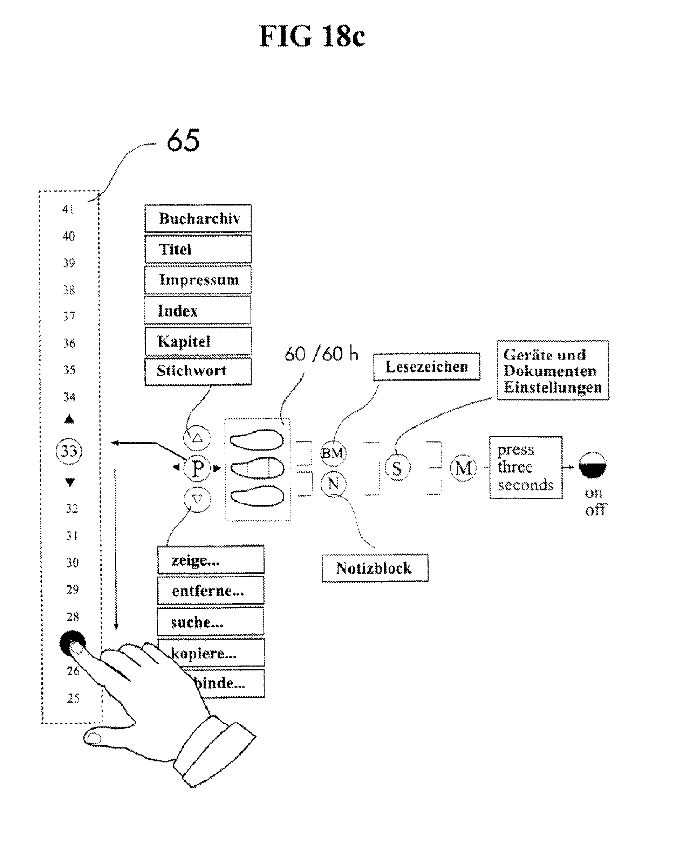

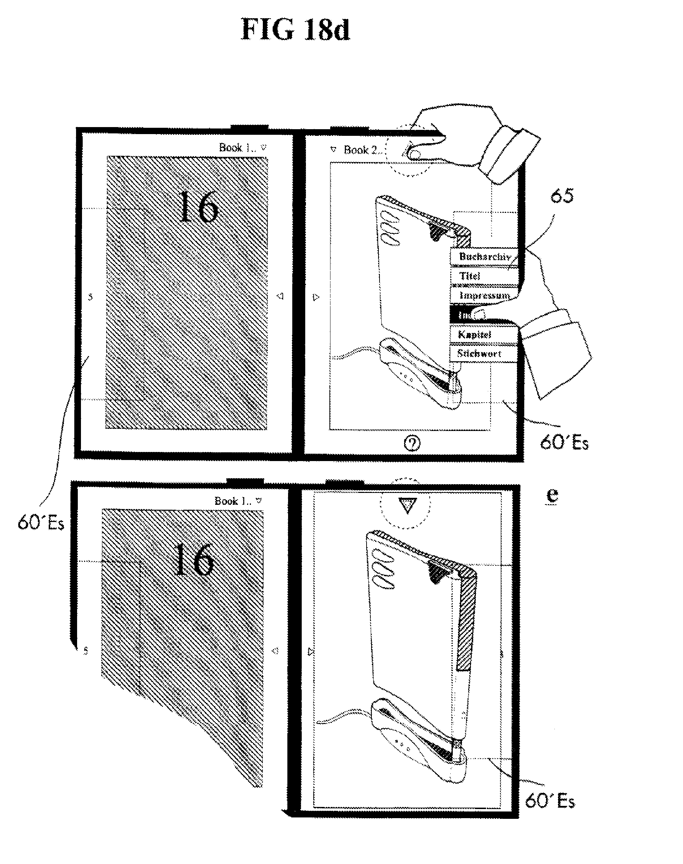

Fig. 18 zeigt am Beispiel eines ein-/ und zweiteiligen Anzeigeteils, mit einer zusätzlichen Möglichkeit der Eingabe über die Anzeigenfläche (Touchscreen), die Programmierung der vorzugsweise rückseitig angeordneten, drei Bedienelemente für ein digitales Buch, bei welchem die realen Bedienelemente in einer ersten Funktion die Bereitstellung von Bedieninformationen auf der Anzeigenfläche realisiert, zur anschließenden Weiterbearbeitungs- bzw. Bedienungsmöglichkeit über eine sensitive Anzeigenfläche.
Fig. 19 zeigt am Beispiel eines ein- / und zweiteiligen Anzeigenteils, die Programmierung der vorzugsweise rückseitig angeordneten, drei Bedienelemente für ein digitales Buch, als schnellfunktions Bedienelemente für häufige Routineoperationen am Beispiel einer ersten Funktion einfach zu betätigenden Bedienelemente, beispielsweise zum Bewegen der Seiten innerhalb eines Buchdokumentes, und die Bearbeitung von nicht so häufig gebrauchten Funktionen über die Anzeigenfläche, wobei diese über das Berühren einer Stelle in der Anzeigenfläche bereitgestellt werden, und beispielsweise durch die Initialisierung eines gekoppelten Buchdokumentes programmiert sind.

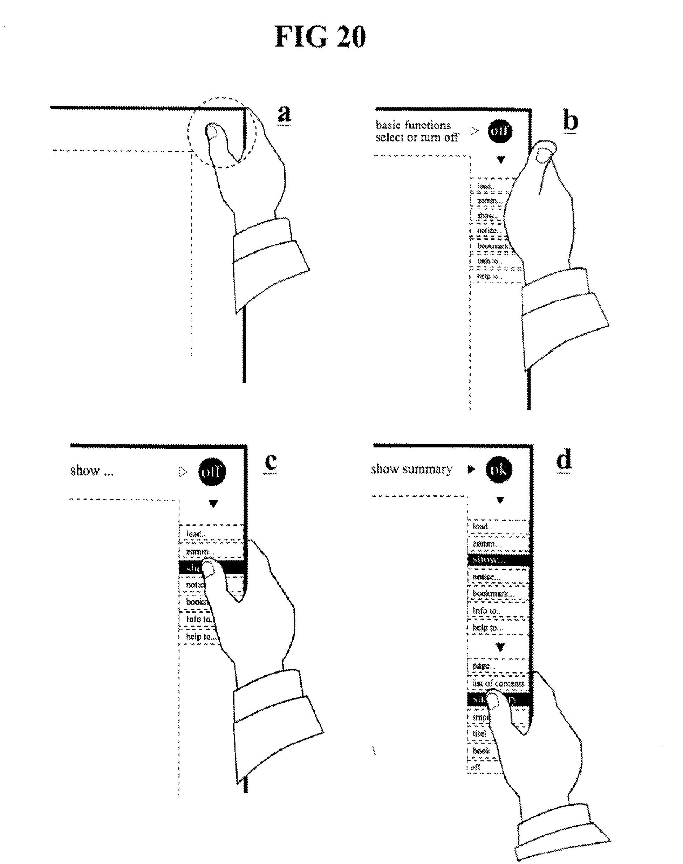

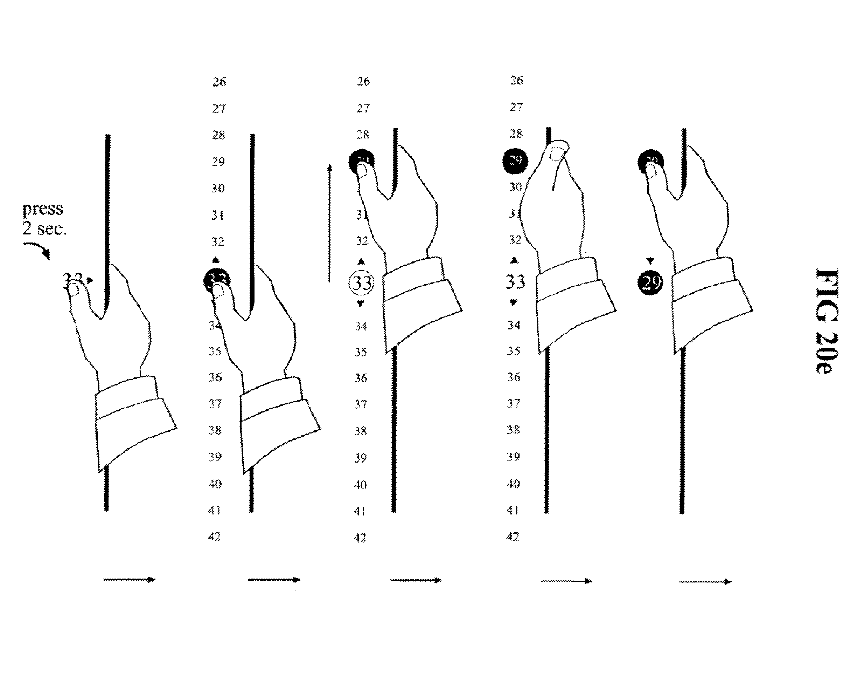

Fig. 20 zeigt am Beispiel einer in der Anzeigenfläche angezeigten Eck- und mittleren Seitenfunktion ein Ausführungsbeispiel der Figur 19 wobei zusätzlich die Seitenrandoperationen im Greifrandbereich der Anzeigeneinheit in einem Dokumentenrand und/oder Rahmen realisiert werden um ein angezeigtes Dokument nicht zu irritieren bzw. zu stören.

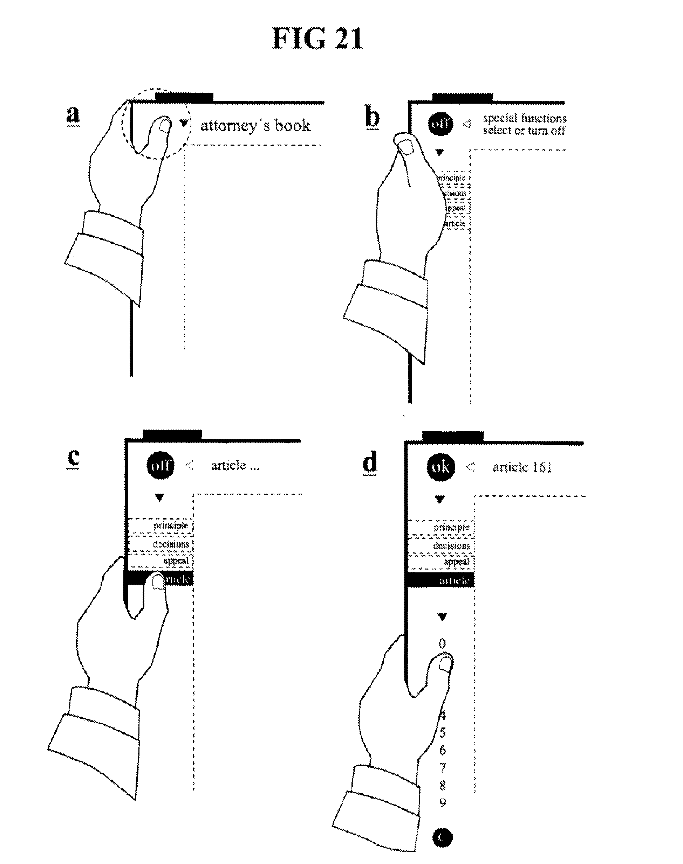

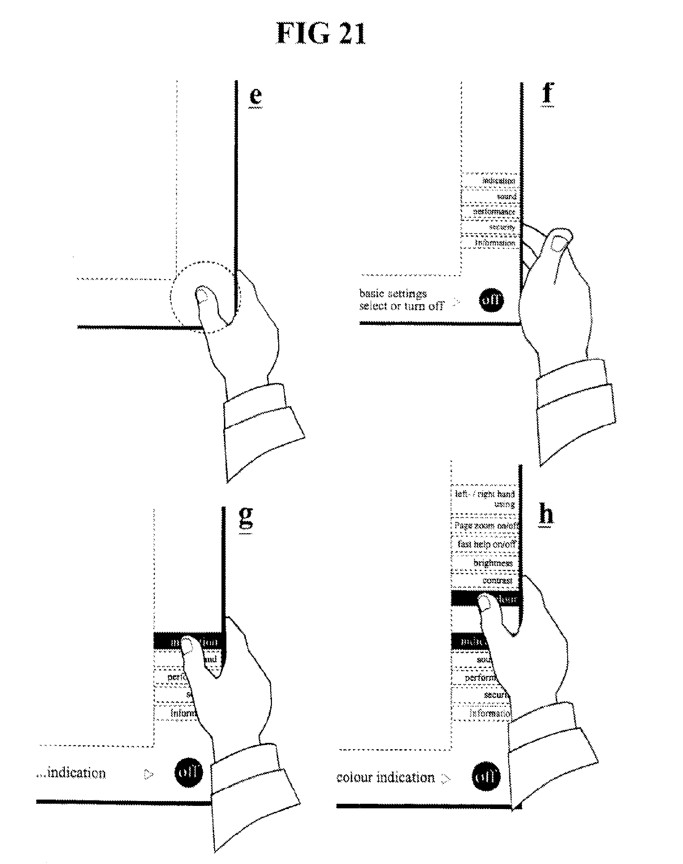

Fig. 21 zeigt am Beispiel zwei in der Anzeigenfläche angezeigten Eckfunktionen ein Ausführungsbeispiel der Figur 19 wobei zusätzlich die Seitenrandoperationen im Greifrandbereich der Anzeigeneinheit in einem Dokumentenrand und/oder Rahmen realisiert werden um ein angezeigtes Dokument nicht zu irritieren bzw. zu stören.
Fig. 22 zeigt am Beispiel einer einteiligen Ausführungsform der vorliegenden Erfindung die selbstätige und softwaregesteuerte Programmierung von Bedienelementen und damit verbunden veränderung der angezeigten Bedieninformationen durch ein gekoppeltes Speichermedium bzw. initialisiertes Dokument.
Fig. 23 zeigt am Beispiel einer zweiteiligen Ausführungsform der vorliegenden Erfindung das selbstätige automatische Umschalten eines Anzeige Verbund-betriebsmoduses beim Koppeln eines zweiten Buchdokumentes mit dem digitalen Buch in einen Anzeige-Getrenntbetriebsmodus mit entsprechender Darstellung des Dokumentes auf der Anzeigenfläche sowie den mit einem umgekehrten Vorgang verbunden selbsttätigen Umschalten von einem Anzeige-Getrenntbetriebsmodus in einen Anzeige Verbund-betriebsmoduses
Fig. 24 zeigt am Beispiel einer zweiteiligen Ausführungsform des erfindungsgemäßen digitalen Buches, der mit dem Koppeln eines Festkörperspeichers verbundene selbsttätige ein- und/oder Ausschaltprozzess des digitalen Buches, sowie die durch das koppeln des Festkörpers automatische bewirkte Bestrebung den Inhalt des Festkörpers einzurichten und/oder Anzuzeigen.

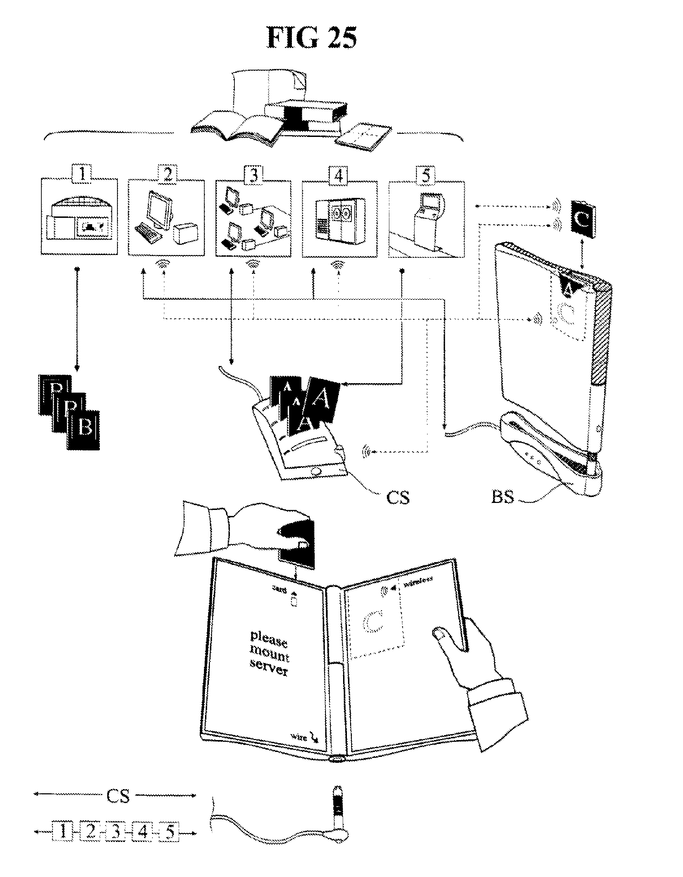

Fig. 25 zeigt am Beispiel einer zweiteiligen Ausführungsform des erfindungsgemäßen digitalen Buches, die Kopplungsmöchkeit unterschiedliche externer Geräte oder Einrichtungen über eine an der unterseite des Digitalen Buches angebrachte multifunktionsschnittstelle, welche als Schnittstelle für Kabelverbinder und/oder der Versorgungsstation ausgelegt ist

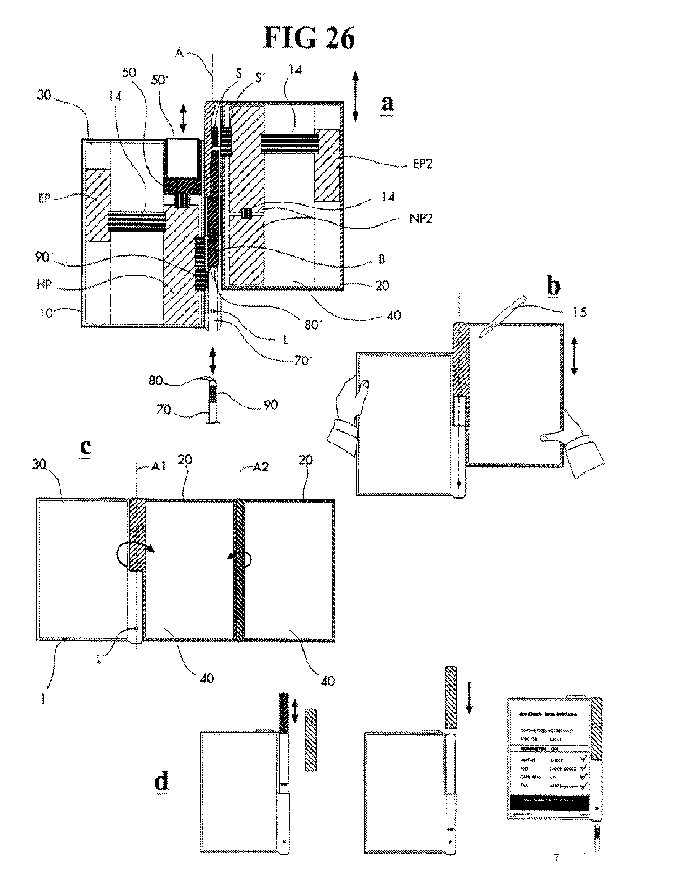

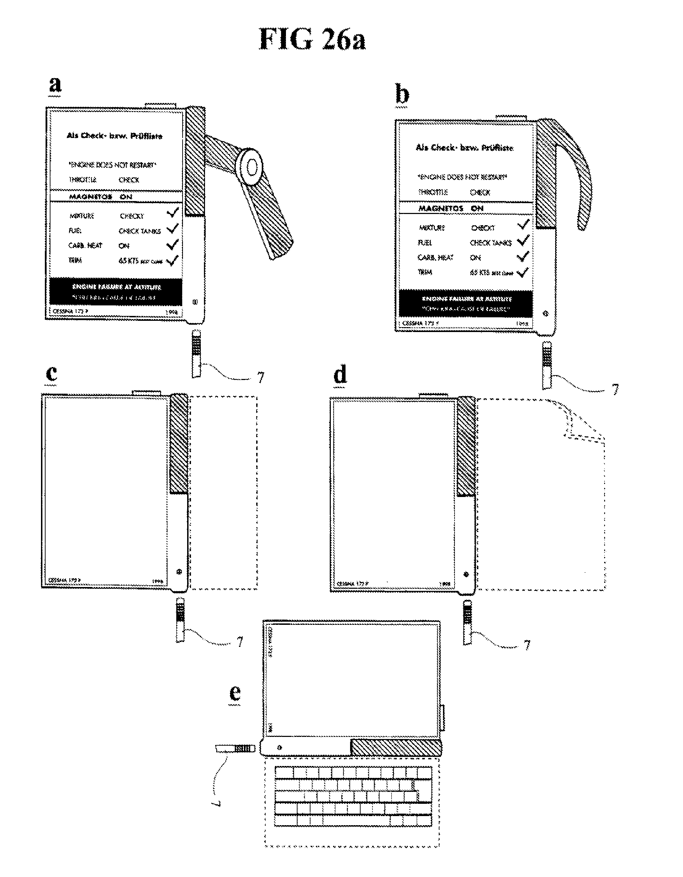

Fig. 26 zeigt Beispielhaft, eine Hardware kopplungs- und entkopplungsmöglichkeit mittels auf- oder abstecken unterschiedlicher Hardwareteilen über das Drehgelenk eines zweiteiligen Digitalen Buches welche beim abstecken eines Teiles, der Haltegriff eines einteiligen Digitalen Buches ist in der elektronik untergebracht ist.
Fig. 26a zeigt am Beispiel einer Einteiligen Ausgangsbasis die in Fig. 26 beschriebene ankopplung eines beispielhaften Haltegriffs oder eines Buchdeckels aus irgendeinem Material welches beispielsweise flexibel gezeigt ist oder die ankopplung einer Laptoptastatur.

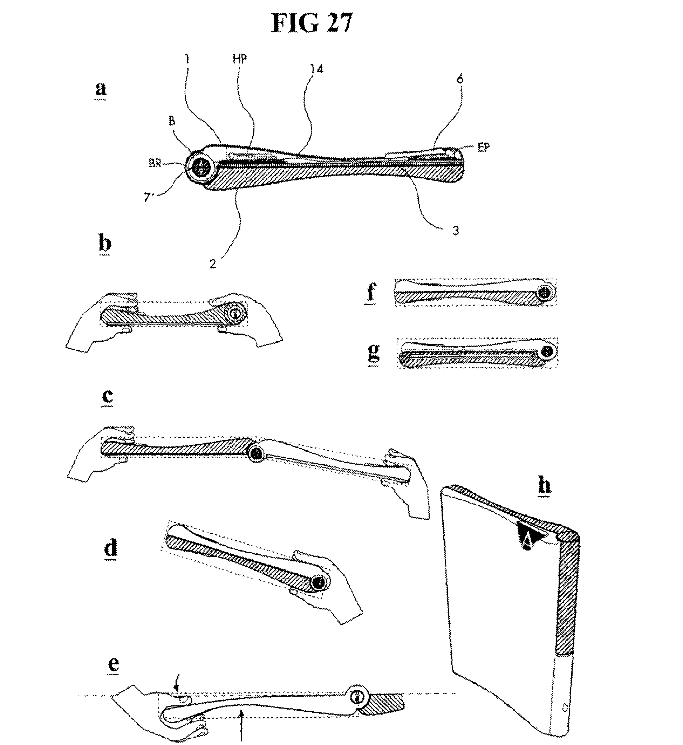

Fig. 27 zeigt die ergonomische Formgebung der vorliegenden Erfindung mit der dadurch erzeugten kompakten Bauweise und der verbesserten Halte- und Bedienmöglichkeit, sowohl eines einteiligen wie eines mehrteiligen Digitalen Buches

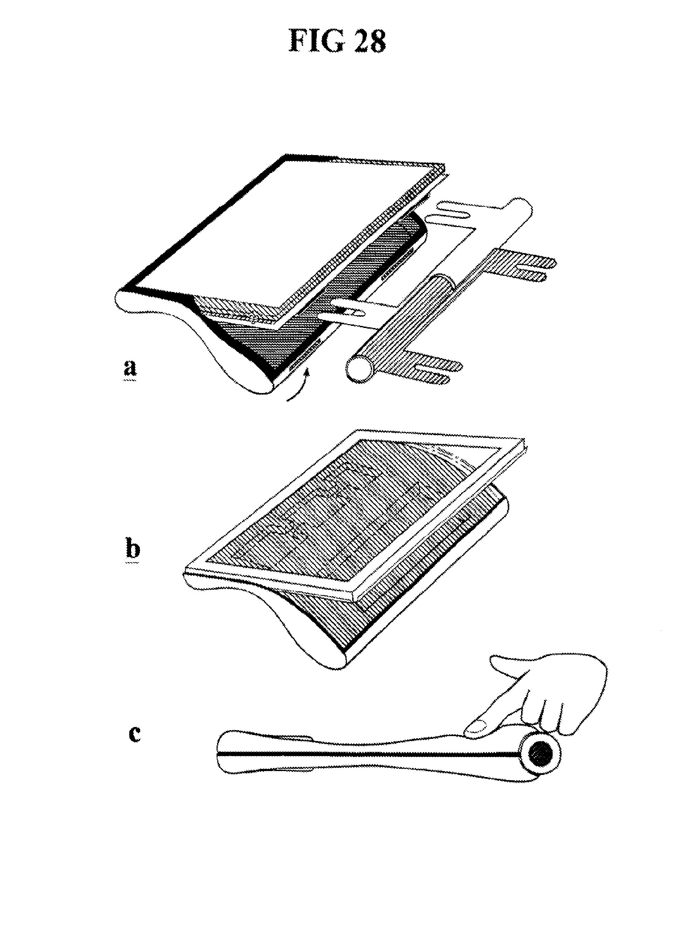

Fig. 28 zeigt ein flexibel ausgebildetes erfindungsgemäße Digitalen Buch am Beispiel eines Anzeigenteiles, und deren flexible Ausbildung zumindest des Anziegefläche umfassenden Körpers bzw. Gehäuse als Beispiel einer Druckkompressiblen Möglichkeit durch z.B. verwendung eines Elektronik ummantelndes Schaumstoffgehäuse

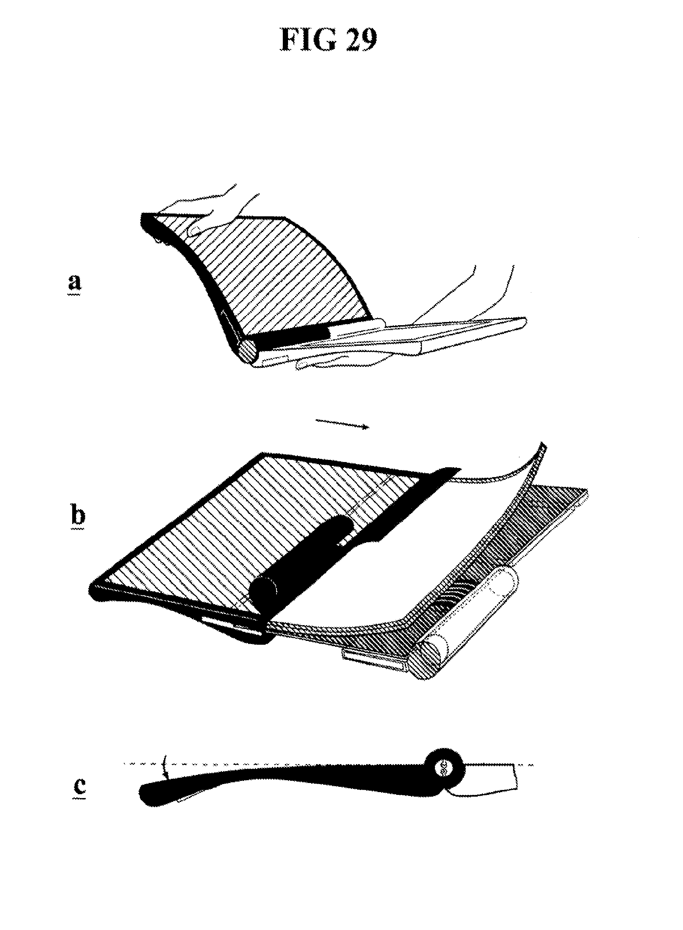

Fig. 29 zeigt ein flexibel ausgebildetes erfindungsgemäße Digitalen Buch am Beispiel eines Anzeigenteiles, und deren flexible Ausbildung von Anziegefläche und Gehäuse als Beispiel einer zumindest teilbiegsamen Möglichkeit durch verspannen eines z.B. Polymer-Displays in einem Gehäuserahmen an zwei Seiten.

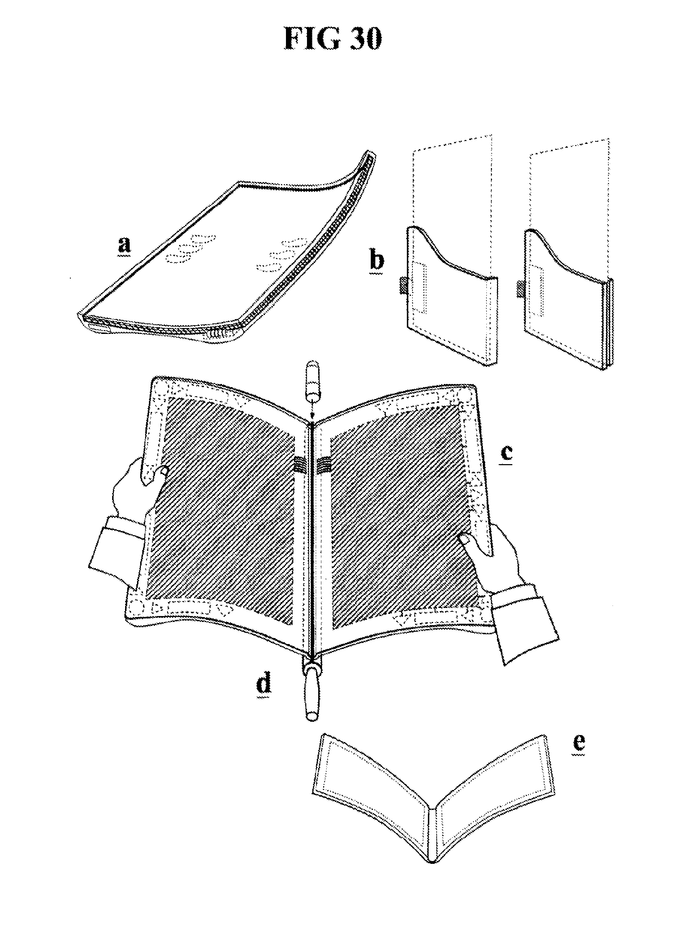

Fig. 30 zeigt mehrere flexibel ausgebildetes erfindungsgemäße digitale Bücher am Beispiel von ein oder zwei Anzeigenteilen mit Bedienmöglichkeit, bei der beispielsweise ein oder mehrere Polymer-Display(s) in zumindest teiltransparentem Kunstoff- oder Kunstoffänlichem Material zur festigung verklebt sind.

Fig. 1 zeigt eine schematische Draufsicht eines Anzeigenteile-koppelbaren Ausführungsbeispieles des erfindungsgemäßen digitalen Buchs mit zwei Anzeigenteilen 1,2 im aufgeklappten Zustand des Buch- Gehäuses mit schematisch angedeuteten Einbauten und Zusatzelementen EP, EP2, HP, NP2, 14, 5, 5', B für das koppelbare digitale Buch einschließlich der Trennungs- und Verbindungsmöglichkeiten der wesentlichen Teile desselben. Ein buchartig auf- und zuklappbares Gehäuse der zweiteiligen Ausführungsform weist zumindest eine Klappachse A, einen Haupt-Teil 1 und zumindest einen Neben-Teil 2 auf, welche Teile 1, 2 zusammen einen Buchrücken-Teil bilden. Die Teile 1, 2 sind mechanisch und/oder elektrisch trennbar zusammengesetzt, wobei die erforderlichen elektrischen Verbindungen der beiden Teile 1, 2 beispielsweise mittels Schleifkontakten S, S' hergestellt werden. Zudem sind schematisch eine Haupt-Teilplatine HP, eine Neben-Teilplatine NP und Erweiterungsplatinen EP, EP2 angedeutet, die über Busleitungen 14 miteinander verbunden sind. In dem Gehäuse ist ein Einsteckschacht 5 mit einer Leseeinrichtung zum Einstecken einer PC-Karte 5' oder dgl., die im wesentlichen zum Laden des digitalen Buches mit beispielsweise Buchtexten, Graphiken, Betriebsprogrammen usw. benutzt wird, ausgebildet. Das Gehäuse weist außerdem eine Bedienungseinheit 6 mit mehreren Bedienungselementen, vorzugsweise einzeln oder in Kombination zu betätigenden Tasten, auf (vergl. z. B. Fig. 3).

Fig. 2 Das Anzeigenteile-koppelbare Ausführungsbeispiel des erfindungsgemäßen digitalen Buchs enthält eine Anzeige-Einheit 1, 2, 3, 4, die zumindest zweiteilig ausgebildet und derart angeordnet ist, daß der Haupt-Teil 1 mit zumindest einem Bildschirm 3 und der zumindest eine Neben-Teil 2 mit zumindest einem Bildschirm 4 im aufgeklappten Zustand des Gehäuses dem Benutzer wie Seiten eines Buches zur Ansicht und einer ggf. erforderlichen Bearbeitung zur Verfügung stehen (vergl. auch Fig. 2).

Fig. 3: Der Anzeigenteil des Hauptteils des Anzeigenteile-koppelbaren Ausführungsbeispieles des erfindungsgemäßen digitalen Buches ist im zugeklappten Zustand des Gehäuses über einen Führungs- und Versorgungsstift 7, der ein Paar von Stromzuführungskontakten 8 und eine Vielzahl von Kontaktringen 9 zur Zu- und Abführung von Information aufweist, in eine Versorgungs-Einheit VE (siehe Fig. 5) mit einer Aufnahmeöffnung VE' zur Zu- und Abführung von Informationssignalen und/oder zur Zuführung von Energie und zur Aufbewahrung des digitalen Buches einsetzbar (vergl. Fig. 5). In dem Buchrückenteil BR ist außerdem eine Leuchtdiode L zur Anzeige des Ladestatus der Batterie B angeordnet. Die aneinanderliegenden Kombinationstasten-Elemente sind im Greifrandbereich angeordnet.

Bei einem abweichenden Ausführungsbeispiel können Haupt- und Nebenteil auch klappbar fest miteinander verbunden sein, ohne daß vorgesehen ist, beide Teile voneinander trennen zu können.

Fig. 4 zeigt teilweise im Schnitt eine Bodenansicht des Hauptteils des festverbunden und/oder des Anzeigenteile-koppelbaren Ausführungsbeispieles des geschlossenen erfindungsgemäßen digitalen Buches zur Benutzung durch z.B. einen Linkshänder und/oder Rechtshänder wenn z.B. eine beschreibbare Anzeigenfläche auf der rechten Seite des digitalen Buches angeordnet ist, wobei die Darstellung die zuvor beschriebenen Elemente enthält. Das Gehäuse enthält in einer Führungs- und Versorgungsöffnung 7' Gegenkontakte 8' für die Stromzuführung und/oder Gegenkontakte 9' für die Zu- und Abführung von Infor- mation. In dem Buchrücken-Teil BR (vergl. auch Fig. 3) ist eine vorzugsweise wiederaufladbare Batterie B zur Stromversorgung der elektronischen Einheiten und Bausteine des digitalen Buches und zum Treiben der Bildschirme 3, 4 vorgesehen.

Fig. 5 zeigt, wie bereits angegeben, eine perspektivische Ansicht des festverbunden und/oder des Anzeigenteile-koppelbaren Ausführungsbeispieles mit zwei Anzeigenteilen des erfindungsgemäßen digitalen Buches in geschlossenem Zustand und eine perspektivische Ansicht einer Versorgungs-Einheit VE mit einer Aufnahmeöffnung VE'. Der aus der Versorgungseinheit ragende Führungs- und Versorgungsstift dient dabei u.a. zur Stabilisierung des Digitalen Buches in der Versorgungseinheit. Das digitale Buch ist relativ zu der Versorgungseinheit VE in einem Zustand während einer Entnahme des digitalen Buches oder in einem Zustand während einer Einführung desselben in die Versorgungs-Einheit VE dargestellt. Die Versorgungs-Einheit VE weist ein Verbindungskabel 89 zur Zu- und/oder Anführung von Information, beispielsweise von und/oder zu einem PC und/oder einem Modem, und/oder zur Zuführung von Energie zur Versorgung der elektronischen Einheiten und Bausteine und zum Treiben der Bildschirme des digitalen Buches auf. Aneinanderliegende Kombinationstasten-Elemente sind im Greifrandbereich angeordnet.

Fig. 6a, Fig. 6b u. Fig. 6c zeigen verschiedene perspektivische Ansichten im "aufgeschlagenen" Zustand eines festverbundenen und/oder eines Anzeigenteile-koppelbaren Ausführungsbeispieles des erfindungsgemäßen digitalen Buches mit zwei Anzeigenteilen, zum Lesen und/oder z.B. beschreiben einer beschreibbaren Anzeigenfläche. Das Beschreiben des beschreibbaren Anzeigenfläche, der drucksensitiv ausgebildet ist, erfolgt in dem gezeigten Beispiel mittels eines Bildschirmstiftes 15. Selbstverständlich kann anstelle der Benutzung des Bildschirmstiftes 15 zum Zwecke einer Markerung oder des Auslösens einer bestimmten Funktion eine Fingerkuppe an bestimmter Stelle gegen den Bildschirm gedrückt werden, wie dies im Zusammenhang mit dem sog. Touchscreen bekannt ist.

Fig. 7a, Fig. 7b. Fig. 7c, Fig. 7d, Fig. 7e . Fig. 7f zeigen, wie bereits angegeben, verschiedene Darstellungen des festverbunden und/oder des Anzeigenteile-koppelbaren Ausführungsbeispieles mit einem, zwei und drei Anzeigenteilen des erfindungsgemäßen digitalen Buches in verschiedenen Benutzungsfällen, aus welchen Darstellungen verschiedene Vorteile des digitalen Buches ersichtlich sind.

Fig. 8 zeigt die Darstellung einer Aufbaumöglichkeit eines Neben-Teils 2a, 2b in Form eines Doppelbildschirms 4a, 4b ähnlich einem Faltplan oder einem Terminplaner im "aufgeschlagenen" Zustand des digitalen Buches für einen Benutzungsfall mit drei Bildschirmen 3, 4a, 4b. In der gezeigten Ausführungsform weist das Gehäuse des digitalen Buches zwei Klappachsen A1, A2 auf.

Fig. 9a u. Fig. 9b zeigen Darstellungen der selben Ausführungsform, wie sie in Fig. 8 gezeigt ist, im zusammengefalteten oder "zugeschlagenen" Zustand des digitalen Buches.

Fig. 10 zeigt, wie bereits angegeben, ein ein Blockschaltbild des Anzeigenteile-koppelbaren Ausführungsbeispieles des Erfindungsgemäßen digitalen Buches der Konfiguration von Einheiten und Bausteinen zum Betrieb des digitalen Buches. Außer den zuvor beschriebenen Elementen sind gemäß diesem Blockschaltbild eine Anzeige-Einheit D mit zwei Bildschirmen 3, 4, zwei Bildschirm-Treiber oder Graphikkarten 3', 4', eine Steuer-Einheit 10 mit Mitteln zur Aufnahme, Speicherung, Verarbeitung und Wiedergabe von Information, wobei die Information in Form von Text-, Bild, Graphik-, Audio- und/oder Video-Information gegeben sein kann, eine Schnittstellen-Einheit 11 zur Zu- und Abführung von Information und zur Zuführung von Energie mit einer Informationsschnittstelle 12 und einer Stromversor- gungseinrichtung 12 zur Energieversorgung der Einheiten D, 10, 11 aus der Versorgungs-Einheit VE vorgesehen. Die SteuerEinheit 10 enthält einen EPROM, einen ROM, einen RAM, eine CPU, eine Steuereinrichtung ST und eine Treiberschaltung TR, welche Elemente über eine Busleitung BL miteinander verbunden sind. Die Bildschirmtreiber oder Graphikkarten 3', 4', die Bedienungs-Einheit 6 mit den Bedienungselementen, die Steuer-Einheit 10 und die Informationsschnittstelle 12 sind über die bereits genannte Busleitung 14 miteinander verbunden.

Fig. 11 zeigt die Darstellung des festverbunden und/oder Anzeigenteile-koppelbaren Ausführungsbeispieles mit zwei Anzeigenteilen des erfindungsgemäßen digitalen Buches, und die optimierten Benutzerschnittstellen zur einfachen Bedienung durch einen Laienanwender und zur Reduzierung von technischen Informationen, mit fünf einzelnen

Fig. 11 zeigt ein erfindungsgemäßes digitales Buch mit einer optimierten Benutzerschnittstelle zur Vereinfachung der Bedienung mit minimalen technischen Informationen, mit zumindest einem auf einer rechten und/oder linken Seite des digitalen Buches befindlichen Manipulationsbereich 60h insbesondere zur Manipulation der angezeigten Informationen und/oder zur Bewirkung einer Betriebszustands- und/oder Einstellungsänderung und/oder zum Laden von Dokumenteninformationen und/oder zum Umschalten in einen anderen Betriebsmodus, wobei in diesem Ausführungsbeispiel der Manipulationsbereich 60h rückseitig (d.h. auf der der Anzeigenfläche abgewandten Seite) angeordnete Funktionstasten F1, F2, F3 sowie vorderseitig einen drucksensitiven Eingabebereich 60t aufweist. Der Eingabebereich 60t kann gegegebenenfalls auch mit anderen technischen Mitteln realisiert werden, z.B. kapazitative Näherungsschalter, Miniaturtasten.

Dabei ist der Manipulationsbereich 60h derart angeordnet, dass Bedienhandlungen möglichst an einer Stelle, an der die Anzeigeneinheit 10 gehalten wird, mit den Fingern der haltenden Hand ausgeführt werden können. In Fig. 11 ist beispielhaft eine obere linke Position aufgezeigt, vorzugsweise ist eine Position auf der mittleren Seite einer Anzeigenseite vorgesehen, da die mittlere Position eine neutralere Ausgangsposition zur Bedienung darstellt, wie in späteren Figurenbeschreibung ersichtlich, wobei vorzugsweise drei Kombinationstasten vorgesehen sind.

rn diese zumindest teilweise Aufgaben mittels ihrer Eigenschaften erfüllen, wozu beispielsweise das selektieren und aktivieren einer auf der Anzeigenfläche angezeigten Information und/oder das Bewegen von Seiten und/oder zumindest die Möglichkeit, eine erste Information auf derAnzeigenfläche anzuzeigen und/oder eine erste bereits angezeigte Information z.B. durch deaktivieren einer Aktivierungssperre (ES) zur Bedienung über irgend eine dafür vorgesehene Eingabe z.B. über Touch-Screen vorzugzweise ebenfalls im seitlichen Greifrandbereich der Anzeige (20) freizugeben. Es ist offengelassen ob nur reale Bedienelemente und/oder in Kombination mit einer sensitiven Anzeigenfläche und/oder in Kombination mit Sprache bedient wird, da es in erster Linie davon abhängt, (in Figuren 16-19 gezeigt) wie die Eigenschaften des Anzeigemittels geplant sind, z.B. als Touch-Screen oder als reines Anzeigen-Display. Grundsätzlich können auch andere Bedienelemente an anderer Stelle der Anzeigeneinheit angebracht sein ohne den Schutzumfang zu beeinflussen. Die Bedienelemente sind in unterschiedlicher Ausführung und Anordnung vorgesehen. Das Bedienfeld kann beispielsweise auch mit Slide-Pad und/oder Track-Ball und/oder einer Mehrfunktionstaste etc ausgestattet sein oder die entsprechenden Tastenfelder als Induktionsfelder bzw. Schalter ausgebildet sein.

Digitates Buch mit einer weiteren erfindungsgemäß, optimierten Benutzerschnittstelle zur Vereinfachung der Bedienung mit minimalen technischen informationen, mit zumindest einer oder mehreren sensitiv ausgebildeten Anzeigefläche(n) über die mittels berühren einer beliebigen jedoch vorher festgelegten Stelle, eine erste Bedieninformation einer unsichtbaren Funktionsauswahl bzw. Bedieninformation bereitgestellt, d.h. angezeigt wird, die weiter zu bedienen sind. Dies geschieht vorzugsweise mittels identifizierung einer Funktionsauswahl bzw. anzuzeigenden Funktionsgruppe über eine festgelegte Positionsinformation (60'V), welche beispielsweise eine erste Ecke der Anzeigenfläche bietet und/oder eine mittlere Seite der Anzeigenfläche. Vorzugsweise ist vorgesehen eine vielzahl irritierender und störender Funktionen bzw. Bedieninformationen welche auf der Anzeigenfläche zur Bedienung dargestellt werden sollen, im normalen Lesemodus ausgeblendet bzw. unsichtbar zu halten und nur bei Bedarf entsprechende Funktions- bzw. Bedieninformationen zur Verfügung zu stellen, wobei entweder alle Funktionen auf einmal oder eine Funktionsgruppe getrennt von zumindest einer weiteren Funktionsgruppe sichtbar gemacht, d.h. bereitgestellt werden kann, um diese zu Bedienen. Der Vorteil ist eine irritationsfreie bzw. ungestörte angezeigte Dokumentenseite ähnlich eines Buches (Anschaungsbeispiele bieten die Figuren 19,20,21) Eine weitere vorteilhafte Weiterbildung, jedoch nicht dadurch beschränkt, welche das Einrichten von Funktionen- bzw. Bedieninformationen durch ein initialisiertes Dokument bewirkt, ergibt die Möglichkeit die Anzeigenfläche in Bereiche zu teilen, die es dem Laienanwender ermöglicht hinsichtlich spezieller Funktionen der angezeigten Publikation, eine sinnvolle Bedienung vorzunehmen, wenn z.B. ein gekoppelter Speicher mit Dokumenteninformationen (50') alle zur Bedienung dieses Dokumentes notwendigen Funktionen bzw. Bedieninformationen in der Anzeigeeinheit an der Stelle unsichtbar zur Verfügung stellt, an der sich der gekoppelte Speicher befindet. So hat der Laienanwender die Möglichkeit, nur die Bedieninformationen anzufordern, die unmittelbar mit dem initialisierten Dokument in Verbindung stehen.

Digitates Buch mit einer weiteren erfindungsgemäß, optimierten Benutzerschnittstelle zur Vereinfachung der Bedienung mit minimalen technischen informationen, mit zumindest einer ersten vorzugsweise im oberen Teil des Digitalen Buches vorgesehen Festkörperkopplunksvorrichtung (50), vorzugsweise für eine Speicherkarte (50'), jedoch nicht darauf beschränkt, welche mittels Kopplung vorzugsweise durch einschieben des Festkörperelementes einen oder mehrere Prozesse im digitalen Buch auslöst, die eine Bedienung von Seiten eines Laien insofern erleichtert, dass z.B. der Inhalt des gekoppelten Festkörpers ohne weiteres zutun des Anwenders bestrebt ist, die Aufgabe des, mit beispielweise einschieben des Körpers (50') in die dazu ausgebildete Aufnahmeöffnung (50), bezweckte Vorhaben auszuführen. Beispielsweise wird der Inhalt einer Speicherkarte mit Buchinformationen ohne weitere Handlung durch den Anwender nach erfolgreicher Koppelung angezeigt, oder zumindest eine erste Information zur Verfügung gestellt die vom Anwender nur verifiziert werden muß (Fig 24). Die dazu notwendige Aufforderung zur Initialisierung kommt dabei vorzugsweise vom digitalen Buch, nach identifizierung des gekoppelten Festkörpers. Hierzu kann die bereits bekannte plug and play technologie eingesetzt werden, um die Erkennung des Festkörpers zu gewährleisten (Siehe dazu auch Figur 22 oder Figur 23).

Eine weitere vorteilhafte erfindungsgemäße Einrichtung zur einfachten Bedienung mit minimalen technischen informationen, mittels Kopplung eines oder mehrer Festkörper mit dem erfindungsgemäßen digitalen Buch ist, dass diese Festkörperelemente Software- und/oder Hardwarebestandteile wie z.B. Elektronik (integrierte Schaltkreise, Batterie, Speicher. Sender und/oder Empfänger für kabellose Informationsübertragung, etc) enthalten, die in irgend einer Form in vorbenannter Art, vorzugsweise ohne weiteres zutun des Anwenders, das Leistungsspektrum hinsichtlich der anzuzeigenden Information, welche über das Festkörpermittel in das digitale Buch gelangt, erweitert und/oder Bedienfunktionen übernimmt, die der Anwender durch eine fehlende alphanummerische Tastatur nicht oder nur eingeschränkt ausführen kann.

Eine weitere vorteilhafte Einrichtung zur einfachen Bedienung mit minimalen technischen informationen, mittels Kopplung eines oder mehrer Festkörper mit dem erfindungsgemäßen digitalen Buch ist das mit der Kopplung eines Festkörperspeichers mit dem digitalen Buch bewirkte selbsttätige Einrichten und/oder Einstellen des Digitalen Buches beispielsweise durch die Programmierung der Funktionstasten des digitalen Buches zur optimalen Bedienung des auf dem Festkörperspeicher gespeicherten Dokumentes (Fig 22) und der entsprechenden Bedieninformationen und/oder beispielsweise das automatische Umschalten von einem Anzeige-Getrennt Betriebsmodus in einen Anzeige-Verbund Betriebsmodus und umgekehrt, vorzugsweise selbstätig durch koppeln und/oder entkoppeln eines ersten und/oder zweiten Festkörperspeicher mit anzuzeigenden Dokumenteninformationen (Fig 23)

Digitates Buch mit einer weiteren erfindungsgemäß, optimierten Benutzerschnittstelle zur Vereinfachung der Bedienung mit minimalen technischen informationen, ist die Kopplung mittels Kabelverbindern über vorzugsweise nur eine Schnittstelle auf der unteren Seite des digitalen Buches (70'), vorzugsweise Im Buchdrehgelenk bei zweiteiligen oder mehrteiligen Anzeigeteilen, welche bei einteiligen Anzeigenteilen der Haltegriff ist, zum Aufnehmen beispielsweise eines Klinkensteckers (70'). Dieses hat den Vorteil das die Schnittstelle robust, und unkompliziert zu bedienen ist, und die für den Kontakt notwendigen Kontaktstellen auf beliebiger länge des Klinkensteckers untegebracht werden können, da der Einschub nicht durch die konstruktionsbedingte bauliche Tiefe des digitalen Buches behindert wird. Die vorzugsweise nur eine Schnittstelle ist derart ausgebildet, das die Elektronik des digitalen Buches mittels Signale zur Übertragung von Daten beispielsweise bidirektional und seriell und/oder Energie wirksam mit unterschiedlichsten Geräten, Einrichtungen oder Vorrichtungen verbunden werden kann. Hierzu können unterschiedliche Peripheriegeräte gekoppelt werden, wie z.B. Drucker und/oder Telefon und/oder Modem und/oder PC's und/oder Laptops und/oder Ladegeräte welche nur beispielhaft sind. Hierzu braucht der Laienanwender ledeglich das entsprechende Kabelverbinder einzustecken und eventuell soweit vorgesehen zu arretieren. Eine weiter Funktion dieser Schnittstelle ist die Aufnahme des Führungs- und Versorgungsstiftes der Buchstation, welche die Aufgabe hat das digitale Buch mit Energie und/oder Dateninformationen zu versorgen, welches beispielsweise je nach Ausführungsform an der Buchstation oder im digitalen Buch einzustellen ist. Gleichermaßen dient dieser Versorugungstecker als Stabilisierungsstift (Fig 5/7) des hochkant aufzusteckenden digitalen Buches, als zweiteilig ausgebildetet Buch im geschlossenen Zustand und/oder als einteiliges Buch über die im Haltegriff integrierte Schnittstelle im offenen Zustand (nicht gezeigt).

Eine erste optimierte Benutzerschnittstelle, zur einfachen Bedienung durch den Laienanwender, und zur Reduzierung von irritierenden technischen Informationen, ist zumindest eine auf einer rechten und/oder linken Seite des digitalen Buches befindliche Eingabeeinheit zur manipulation der angezeigten Informationen und/oder zur Bewirkung einer Betriebszustands- und/oder Einstellungsänderung und/oder zum laden von Dokumenteninformationen und/oder zum Umschalten in einen anderen Betriebsmodus, jedoch nicht darauf beschränkt, wobei das Haupt- Eingabeelemente bzw. Tastenelement(e) vorteilhafter weise auf der Anzeigenseite abgewanten Seite (60h) des Digitalen Buches derart im Greifrand angeordnet sind, dass Bedienhandlungen möglichst an einer Stelle, an der die Anzeigeneinheit (10) gehalten wird, mit den Fingern ier Haltenden Hand ausgeführt werden können. Hier ist beispielhaft eine obere linke Position aufgezeigt, vorzugsweise ist eine Position auf der mittleren Seite einer Anzeigenseite vorgesehen, da die mittlere Position eine neutralere Ausgangsposition zur Bedienung darstellt, wie in späteren Figurenbeschreibung ersichtlich.

Ebenso nicht einschränkend ist die Verwendung von drei Kombinationstasten, da diese vorzugsweise in dem gezeigten Anschauungsbeispiel Verwendung finden, jedoch durch andere Bedienelemente ersetzt werden können, sofern diese zumindest teilweise Aufgaben mittels ihrer Eigenschaften erfüllen, wozu beispielsweise das selektieren und aktivieren einer auf der Anzeigenfläche angezeigten Information und/oder das Bewegen von Seiten und/oder zumindest die Möglichkeit, eine erste Information auf derAnzeigenfläche anzuzeigen und/oder eine erste bereits angezeigte Information z.B. durch deaktivieren einer Aktivierungssperre (ES) zur Bedienung über irgend eine dafür vorgesehene Eingabe z.B. über Touch- Screen vorzugzweise ebenfals im seitlichen Greifrandbereich der Anzeige (20) freizugeben. Das aufgezeigte Anschauunsbeispiel lässt offen ob nur reale Bedienelemente und/oder in Kombination mit einer sensitiven Anzeigenfläche und/oder in Kombination mit Sprache bedient wird, da es in erster Linie davon abhängt, wie in späteren Figuren gezeigt, wie die Eigenschaften des Anzeigemittels geplant ist, z.B. als Touch-Screen oder als reines Anzeigen-Display. Grundsätzlich können auch andere Bedienelemente an anderer Stelle der Anzeigeneinheit angebracht sein ohne den Schutzumfang zu beeinflussen. Die Bedienelemente sind in unterschiedlicher Ausführung und Anordnung vorgesehen. Das Bedienfeld kann beispielsweise auch mit Slide-Pad und/oder Track-Ball und/oder einer Mehrfunktionstaste etc ausgestattet sein oder die entsprechenden Tastenfelder als Induktionsfelder bzw. Schalter ausgebildet sein.

Eine weitere optimierte Benutzerschnittstelle, zur einfachen Bedienung durch den Laienanwender, und zur Reduzierung von irritierenden technischen Informationen, ist eine oder mehrere sensitiv ausgebildete Anzeigefläche(n) über die mittels berühren einer beliebigen jedoch vorher festgelegten Stelle, eine erste Bedieninformation einer unsichtbaren Funktionsauswahl bzw. Bedieninformation bereitgestellt, d.h. angezeigt wird, die weiter zu bedienen sind. Dies geschieht vorzugsweise mittels identifizierung einer Funktionsauswahl bzw. anzuzeigenden Funktionsgruppe über eine festgelegte Positionsinformation (60'V), welche beispielsweise eine erste Ecke der Anzeigenfläche bietet und/oder eine mittlere Seite der Anzeigenfläche. Vorzugsweise ist vorgesehen eine vielzahl irritierender und störender Funktionen bzw. Bedieninformationen welche auf der Anzeigenfläche zur Bedienung dargestellt werden sollen, im normalen Lesemodus ausgeblendet bzw. unsichtbar zu halten und nur bei Bedarf entsprechende Funktions- bzw. Bedieninformationen zur Verfügung zu stellen, wobei entweder alle Funktionen auf einmal oder eine Funktionsgruppe getrennt von zumindest einer weiteren Funktionsgruppe sichtbar gemacht, d.h. bereitgestellt werden kann, um diese zu Bedienen. Der Vorteil ist eine irritationsfreie bzw. ungestörte angezeigte Dokumentenseite ähnlich eines Buches (Anschaungsbeispiele bieten die Figuren 19,20,21) Eine weitere vorteilhafte Weiterbildung, jedoch nicht dadurch beschränkt, welche das Einrichten von Funktionen- bzw. Bedieninformationen durch ein initialisiertes Dokument bewirkt, ergibt die Möglichkeit die Anzeigenfläche in Bereiche zu teilen, die es dem Laienanwender ermöglicht hinsichtlich spezieller Funktionen der angezeigten Publikation, eine sinnvolle Bedienung vorzunehmen, wenn z.B. ein gekoppelter Speicher mit Dokumenteninformationen (50') alle zur Bedienung dieses Dokumentes notwendigen Funktionen bzw. Bedieninformationen in der Anzeigeeinheit an der Stelle unsichtbar zur Verfügung stellt, an der sich der gekoppelte Speicher befindet. So hat der Laienanwender die Möglichkeit, nur die Bedieninformationen anzufordern, die unmittelbar mit dem initialisierten Dokument in Verbindung stehen.

Eine weitere optimierte Benutzerschnittstelle, zur einfachen Bedienung durch den Laienanwender, und zur Reduzierung von irritierenden technischen Informationen, ist zumindest eine erste im oberen Teil des Digitalen Buches vorgesehen Festkörperkopplunksvorrichtung (50), vorzugsweise für eine Speicherkarte (50'), jedoch nicht darauf beschränkt, welche mittels Kopplung vorzugsweise durch einschieben des Festkörperelementes einen oder mehrere Prozesse im digitalen Buch auslöst, die eine Bedienung von Seiten eines Laien insofern erleichtert, dass z.B. der Inhalt des gekoppelten Festkörpers ohne weiteres zutun des Anwenders bestrebt ist, die Aufgabe des, mit beispielweise einschieben des Körpers (50') in die dazu ausgebildete Aufnahmeöffnung (50), bezweckte Vorhaben auszuführen.

Beispielsweise wird der Inhalt einer Speicherkarte mit Buchinformationen ohne weitere Handlung durch den Anwender nach erfolgreicher Koppelung angezeigt, oder zumindest eine erste Information zur Verfügung gestellt die vom Anwender nur verifiziert werden muß (Fig 24). Die dazu notwendige Aufforderung zur Initialisierung kommt dabei vorzugsweise vom digitalen Buch, nach identifizierung des gekoppelten Festkörpers. Hierzu kann die bereits bekannte plug and play technologie eingesetzt werden, um die Erkennung des Festkörpers zu gewährleisten (Siehe dazu auch Figur 22 oder Figur 23).

Eine weitere vorteilhafte Einrichtung zur einfachen Bedienung mittels Kopplung eines oder mehrer Festkörper mit dem erfindungsgemäßen digitalen Buch, jedoch nicht darauf beschränkt, ist, dass diese Festkörperelemente Software- und/oder Hardwarebestandteile wie z.B. elektronik (integrierte Schaltkreise, Batterie, Speicher, Sender und/oder Empfänger für kabellose Informationsübertragung, etc) enthalten, die in irgend einer Form in vorbenannter Art, vorzugsweise ohne weiteres zutun des Anwenders, das Leistungsspektrum hinsichtlich der anzuzeigenden Information, welche über das Festkörpermittel in das digitale Buch gelangt, erweitert und/oder Bedienfunktionen übernimmt, die der Anwender durch eine fehlende alphanummerische Tastatur nicht oder nur eingeschränkt ausführen kann. Eine weitere vorteilhafte Einrichtung zur einfachen Bedienung mittels Kopplung eines oder mehrer Festkörper mit dem erfindungsgemäßen digitalen Buch, jedoch nicht darauf beschränkt, ist die mit der Kopplung eines Festkörperspeichers mit dem digitalen Buch bewirkte selbsttätige Einrichten und/oder Einstellen des Digitalen Buches beispielsweise durch die Programmierung der Funktionstasten des digitalen Buches zur optimalen Bedienung des auf dem Festkörperspeicher gespeicherten Dokumentes (Fig 22) und der entsprechenden Bedieninformationen und/oder beispielsweise das automatische Umschalten von einem Anzeige-Getrennt Betriebsmodus in einen Anzeige-Verbund Betriebsmodus und umgekehrt, vorzugsweise selbstätig durch koppeln und/oder entkoppeln eines ersten und/oder zweiten Festkörperspeicher mit anzuzeigenden Dokumenteninformationen (Fig 23)

Eine weitere optimierte Benutzerschnittstelle, zur einfachen Bedienung durch den Laienanwender, und zur reduzierung von irritierenden technischen Informationen, ist die Kopplung mittels Kabelverbindern über vorzugsweise nur eine Schnittstelle auf der unteren Seite des digitalen Buches (70'), vorzugsweise Im Buchdrehgelenk bei zweiteiligen oder mehrteiligen Anzeigeteilen, welche bei einteiligen Anzeigenteilen der Haltegriff ist, zum Aufnehmen beispielsweise eines Klinkensteckers (70'). Dieses hat den Vorteil das die Schnittstelle robust, und unkompliziert zu bedienen ist, und die für den Kontakt notwendigen Kontaktstellen auf beliebiger länge des Klinkensteckers untegebracht werden können, da der Einschub nicht durch die konstruktionsbedingte bauliche Tiefe des digitalen Buches behindert wird. Die vorzugsweise nur eine Schnittstelle ist derart ausgebildet, das die Elektronik des digitalen Buches mittels Signale zur Übertragung von Daten beispielsweise bidirektional und seriell und/oder Energie wirksam mit unterschiedlichsten Geräten, Einrichtungen oder Vorrichtungen verbunden werden kann. Hierzu können unterschiedliche Peripheriegeräte gekoppelt werden, wie z.B. Drucker und/oder Telefon und/oder Modem und/oder PC's und/oder Laptops und/oder Ladegeräte welche nur beispielhaft sind. Hierzu braucht der Laienanwender ledeglich das entsprechende Kabelverbinder einzustecken und eventuell soweit vorgesehen zu arretieren. Eine weiter Funktion dieser Schnittstelle ist die Aufnahme des Führungs- und Versorgungsstiftes der Buchstation, welche die Aufgabe hat das digitale Buch mit Energie und/oder Dateninformationen zu versorgen, welches beispielsweise je nach Ausführungsform an der Buchstation oder im digitalen Buch einzustellen ist. Gleichermaßen dient dieser Versorugungstecker als Stabilisierungsstift (Fig 5/7) des hochkant aufzusteckenden digitalen Buches, als zweiteilig ausgebildetet Buch im geschlossenen Zustand und/oder als einteiliges Buch über die im Haltegriff integrierte Schnittstelle im offenen Zustand (nicht gezeigt).

Fig. 12 zeigt die Darstellung unterschiedlicher Erscheinungsformen des erfindungsgemäßen digitalen Buches, jedoch nicht darauf beschränkt, als ein- oder mehrteiliger, festverbundener oder Anzeigenteile- koppelbarer Ausführung.

Fig. 13 zeigt die des erfindungsgemäßen digitalen Buches zu Grunde liegenden Teilaspekte zur Optimierung d.h. zur Vereinfachung der Bedienung bei gleichzeitiger Reduzierung von irritierenden Informationen und/oder technischen Ausbildungen Durch die Bündelung der Aufgaben und der entsprechenden auf einen Bereich konzentrierten Eingabemöglichkeiten

Es sind zwei Teilbereiche 1 und 2 gezeigt die die entscheidenden Aspekte der Erfindung welche im zusammenhang stehen, aber auch jeweils getrennt voneinander eine entscheidende Rolle spielen. ausgehend von einem Anschauungsbeispiel, eines aufgeschlagenen digitalen Buches auf der linken Seite der Fig. 13, welches die manipulation angezeigter Informationen mittels einem Curser zeigt, sind im Bereich 1 der Fig. 13 alle Teilaspekte die gemeinsam und/oder getrennt voneinander eine entscheidende Rolle zur vereinfachung der Bedienung des digitalen Buches stehen aufgezeigt. Dazu gehöhren die Reduzierung des Bedienaufwandes und der Bedieninformation über die Möglichkeit der Bedienfeld- bzw. Tastenprogrammierung 60TPr eines initialisierten Dokumentes Doc , welches vorzugsweise beim koppeln des Informationstragenden Festkörperspeichers 50 selbsttätig ausgeführt wird 1a.

Ein weitere Aspekt 1b ist die reduzierung des Bedienaufwandes und der Bedieninformation durch die kombination von Eingabemöglichkeiten wie beispielsweise reale Bedienelemente 60, welche mit virtuellen Bedienelementen 60'und 60'V und/oder mit Sracheingabe SpE wobei die realen Bedienelemente vorzugsweise mit sich selbst zu kombinieren sind, wodurch sich ebenfalls die Anzahl der benötigten Bedienelemente reduzieren läßt, in dem Anschauungsbeispiel werden drei Tasten verwendet 60, mit denen auf vorgenannter Art eine vielzahl von Funktionen ausführt werden können. Eine weitere optimierung der der Bedienfunktion ist die verteilung der Bedienelemente auf die Finger der anzeigemittel haltenden Hand 1b 1, 2, 3, 4, 5 derart, dass vorzugsweise Zeigefinger 1 Mittelfinger 2 und Ringfinger 3 die Funktionstasten bedienen, was eine wesentlich schnellere Bedienung ermöglicht, während der kleine Finger zur arretierung des Anzeigenteils dient und der Daumen frei beweglich ist um gegebenenfalls in kombination mit Sprache und/oder mit den realen Bedienelementen oder für sich allein eine bedienung der virtuellen Bedienelemente, dass heißt auf der Aanzeigenfläche dargestellte Eingabeelemente 60' bedienen kann. Hierzu sind die realen Bedienelemente 60 vorzugsweise auf der Rückseite einer Anzeigenfläche angeordnet.

Eine weitere optimierung der Bedienfunktionen 1c ist die komprimierte Anordnung der Bedienelemente AB auf einen Bereich FBh, der beim halten der Anzeige von den Fingern bedient werden kann, wobei der Bereich vorzugsweise der Bereich im seitlichen Greifrandbereich ist wo sich die Anzeigehaltende Hand am häufigsten aufhält d.h. unter ergonomischem Gesichstpunkt im mittleren Bereich einer Anzeigenseite, da diese Stelle am ausgewogensten zum Halten der Anzeigeeinheit ist und in Bezug auf die Links- oder Rechtshänderbedienung am neutralsten zu Bedienen ist.

Ausgehend von einem weiteren Anschauungsbeispiel, bei der sich ein aufgeschlagenes digitales Buch auf der rechten Seite der Fig. 13, bei dem keine Bedienelemente zu sehen sind, sind im Bereich 2 der Fig. 13 alle Teilaspekte der gemeinsam und/oder getrennt voneinander eine entscheidende Rolle zur reduzierung der beim lesen eines Dokumentes störender bzw irritierender Elemente aufgezeigt.

Dazu gehören die reduzierung der realen Bedienelemente 60 auf ein notwendiges minimum und/oder das verbergen von Bedienelementen 60h z.B. auf die der Anzeigenseite abgewandten Seite der Anzeigeneinheit 2b.In Fig. 2b wird das verbergen von virtuellen, d.h. über die Anzeigenfläche zu bedienenden Manipulationselemente d.h. Funktionselemente 60'aufgezeigt, die erst bei Bedarf gemeinsam oder getrennt voneinander sichtbar gemacht werden, derart das keine erste Funktionsinformation zur identifizierung z.B. einer Menüauswahl bereitsteht, und nur die Lage eines ersten Eingabemöglichkeit 60'EF relativ zur Anzeigenfläche eine orientierung liefert, was für Funktionen bereitzustellen sind. vorzugsweise dienen zur orientierung die Ecken 60'EF oder miteleren Seiten (nicht angezeigt) der Anzeigenfläche

In Fig 2b wird weiterhin ein Aktivierungsschutzfeld 60ES gezeigt, welches eine versehendliche aktivierung einer einer angezeigten oder nicht angezeigten Funktion 60' im Greifrandbereich vermeidet. Hierzu wird mittels einer Eingabe über z.B. Sprache SpE oder einem realen Bedienelement 60', 60 oder einer anderen Stelle auf der Anzeigenfläche beispielsweise eineEcke 60MSF der Eigabeschutz aufgehoben um eine Funktion ausführen zu können. Eine weitere möglichkeit der reduzierung störender Elemente 2c bezieht sich auf bereitsbereitgestellte Bedien- bzw. Funktionsinformationen, die zur vermeidung von iritation eines angezeigten Dokumentes in einem Rand oder einem Rahmenneben dem angezeigten Dokument, ähnlich dem Buchrand oder dem Passpartout eines Bildes neben den Dokument 60FR befinden

Die auf einen bestimmten Bereich konzentrierte Bedienung mit vorzugsweise Rückseiteigen oder seitlichen Kombinationstasten welche vorteilhafterweise nicht mehr wie drei voneinander getrennte Bedienelemente sein sollten, jedoch nicht darauf beschränkt, ist eine bessere Verteilung einer vielzahl von Aufgaben und die damit verbunden Funktionen unter Berücksichtigung einer möglichst ruhigen bzw.
entspannten Haltung bei Tragen bzw. Halten der Anzeigeeinheit gegeben.

Fig. 14 zeigt am Beispiel eines aufgeschlagenen, zweiteiligen erfindungsgemäßen digitalen Buches, jedoch nicht darauf beschränkt, eine Bereitstellung von Bedien-Informationen und deren Weiterbedienung mittels der Anzeigenfläche abgewandten Bedienelemente und/oder mittels der Eingabe über eine sensitive Eingabefläche, und die Bereitstellung einer ersten Funktionsinformation sowie Weiterbedienung über die sensitive Eingabefläche.

Fig. 15 zeigt Funktionsmöglichkeiten einer Minimalkonfiguration von Bedienelementen des erfindungsgemäßen digitalen Buches, mit einer ersten Funktion zur Ausführung einer ersten Aufgabe, am Beispiel des Bereitstellens einer Auswahl-Information auf der Anzeigefläche und der nach der ersten Bedienung folgenden selbsttätigen und softwaregesteuerten Umprogrammierung der Bedienelemente zur Erfüllung einer zweiten Aufgabe, z.B. dem selektieren und/oder aktivieren einer ausgewählten Funktion oder dem Ausschalten der Bereitstellung.

Fig. 16 zeigt die generelle Kombinationsmöglichkeit eines Eingabefeldes des erfindungsgemäßen digitalen Buches, am Beispiel von drei realen Bedienelementen und deren Programmierung hinsichtlich einer ersten Funktion und durch Kombinationsbedienung möglichen weiteren ersten Funktionen, sowie der selbstätigen softwaregesteuerten Umprogrammierung der Bedienelemente durch einen ersten Bedienschritt, zur Erfüllung einer anderen Aufgabe in einem zweiten Bedienungsschritt.

Fig. 17 zeigt am Beispiel eines ein-/ und zweiteiligen Anzeigeteils des erfindungsgemäßen digitalen Buches, die Programmierung der vorzugsweise rückseitig angeordneten, drei Bedienelemente für ein digitales Buch, bei welchem eine Bedienung nur über reale Bedienelemente bewerkstelligt wird.

Fig. 18 zeigt am Beispiel eines ein-/ und zweiteiligen Anzeigeteils, mit einer zusätzlichen Möglichkeit der Eingabe über die Anzeigenfläche (Touchscreen), die Programmierung der vorzugsweise rückseitig angeordneten, drei Bedienelemente für ein digitales Buch, bei welchem die realen Bedienelemente in einer ersten Funktion die Bereitstellung von Bedieninformationen auf der Anzeigenfläche realisiert, zur anschließenden Weiterbearbeitungs- bzw. Bedienungsmöglichkeit über eine sensitive Anzeigenfläche.

Fig. 19 zeigt am Beispiel eines ein- / und zweiteiligen Anzeigenteils, die Programmierung der vorzugsweise rückseitig angeordneten, drei Bedienelemente für ein digitales Buch, als schnellfunktions Bedienelemente für häufige Routineoperationen am Beispiel einer ersten Funktion einfach zu betätigenden Bedienelemente, beispielsweise zum Bewegen der Seiten innerhalb eines Buchdokumentes, und die Bearbeitung von nicht so häufig gebrauchten Funktionen über die Anzeigenfläche, wobei diese über das Berühren einer Stelle in der Anzeigenfläche bereitgestellt werden, und beispielsweise durch die initialisierung eines gekoppelten Buchdokumentes programmiert sind.

Fig. 20 zeigt am Beispiel einer in der Anzeigenfläche angezeigten Eck-und mittleren Seitenfunktion ein Ausführungsbeispiel der Figur 19 wobei zusätzlich die Seitenrandoperationen im Greifrandbereich der Anzeigeneinheit in einem Dokumentenrand und/oder Rahmen realisiert werden um ein angezeigtes Dokument nicht zu irritieren bzw. zu stören.

Fig. 21 zeigt am Beispiel zwei in der Anzeigenfläche angezeigten Eckfunktionen ein Ausführungsbeispiel der Figur 19 wobei zusätzlich die Seitenrandoperationen im Greifrandbereich der Anzeigeneinheit in einem Dokumentenrand und/oder Rahmen realisiert werden um ein angezeigtes Dokument nicht zu irritieren bzw. zu stören.

Fig. 22 zeigt am Beispiel einer einteiligen Ausführungsform der vorliegenden Erfindung die selbstätige und softwaregesteuerte Programmierung von Bedienelementen und damit verbunden veränderung der angezeigten Bedieninformationen durch ein gekoppeltes Speichermedium bzw. initialisiertes Dokument.

Fig. 23 zeigt am Beispiel einer zweiteiligen Ausführungsform der vorliegenden Erfindung das selbstätige automatische Umschalten eines Anzeige Verbund-betriebsmoduses beim Koppeln eines zweiten Buchdokumentes mit dem digitalen Buch in einen Anzeige-Getrenntbetriebsmodus mit entsprechender Darstellung des Dokumentes auf der Anzeigenfläche sowie den mit einem umgekehrten Vorgang verbunden selbsttätigen Umschalten von einem Anzeige-Getrenntbetriebsmodus in einen Anzeige Verbund-betriebsmoduses

Fig. 24 zeigt am Beispiel einer zweiteiligen Ausführungsform des erfindungsgemäßen digitalen Buches, der mit dem Koppeln eines Festkörperspeichers verbundene selbsttätige ein- und/oder Ausschaltprozzess des digitalen Buches, sowie die durch das koppeln des Festkörpers automatische bewirkte Bestrebung den Inhalt des Festkörpers einzurichten und/oder Anzuzeigen.

Fig. 25 zeigt am Beispiel einer zweiteiligen Ausführungsform des erfindungsgemäßen digitalen Buches, die Kopplungsmöchkeit unterschiedliche externer Geräte oder Einrichtungen über eine an der unterseite des Digitalen Buches angebrachte multifunktionsschnittstelle, welche als Schnittstelle für Kabelverbinder und/oder der Versorgungsstation ausgelegt ist

Fig. 26 zeigt Beispielhaft, eine Hardware kopplungs- und entkoppfungsmöglichkeit mittels auf- oder abstecken unterschiedlicher Hardwareteilen über das Drehgelenk eines zweiteiligen Digitalen Buches welche beim abstecken eines Teiles, der Haltegriff eines einteiligen Digitalen Buches ist in der elektronik untergebracht ist.

Fig. 26a zeigt am Beispiel einer Einteiligen Ausgangsbasis die in Fig. 26 beschriebene ankopplung eines beispielhaften Haltegriffs oder eines Buchdeckels aus irgendeinem Material welches beispielsweise flexibel gezeigt ist oder die ankopplung einer Laptoptastatur oder einer Kartenstation.

Fig. 27 zeigt die ergonomische Formgebung der vorliegenden Erfindung mit der dadurch erzeugten kompakten Bauweise und der verbesserten Halte- und Bedienmöglichkeit, sowohl eines einteiligen wie eines mehrteiligen Digitalen Buches

Fig. 28 zeigt ein flexibel ausgebildetes erfindungsgemäße Digitalen Buch am Beispiel eines Anzeigenteiles, und deren flexible Ausbildung zumindest des Anziegefläche umfassenden Körpers bzw. Gehäuse als Beispiel einer Druckkompressiblen Möglichkeit durch z.B. verwendung eines Elektronik ummantelndes Schaumstoffgehäuse

Fig. 29 zeigt ein flexibel ausgebildetes erfindungsgemäße Digitalen Buch am Beispiel eines Anzeigenteiles, und deren flexible Ausbildung von Anziegefläche und Gehäuse als Beispiel einer zumindest teilbiegsamen Möglichkeit durch verspannen eines z.B. Polymer-Displays in einem Gehäuserahmen an zwei Seiten.

Fig. 30 zeigt mehrere flexibel ausgebildetes erfindungsgemäße digitale Bücher am Beispiel von ein oder zwei Anzeigenteilen mit Bedienmöglichkeit, bei der beispielsweise ein oder mehrere Polymer-Display(s) in zumindest teiltransparentem Kunstoff- oder Kunstoffänlichem Material zur festigung verklebt sind.

Wie bereits beschrieben, ist der Nebenteil 2 oder sind die Neben-Teile 2a, 2b derart ausgebildet, daß er/sie von dem Haupt-Teil 1 elektrisch und/oder mechanisch trennbar ist/ sind, so daß der Haupt-Teil 1 für sich allein benutzbar ist. Die zumindest eine Bedienungs-Einheit 6 enthält als die Bedienungselemente Richtungstasten und Funktionstasten, die für verschiedenartige Funktionen einzeln oder in Kombination zu betätigen sind.

Die Anzeige-Einheit D kann vorteilhafterweise eine Funktion zum Anzeigen des Stromversorgungsstatus, vorzugsweise auf dem Bildschirm des Haupt-Teils 1, aufweisen.

Der Bildschirm 3 oder die Bildschirme 3, 4 der AnzeigeEinheit D ist/sind vorzugsweise flexibel ausgebildet, was auch für das Gehäuse gilt, so daß das digitale Buch wie ein Notizbuch, beispielweise in einer Innentasche einer Jacke, mitgeführt werden kann. Für den Bildschirm 3 oder die Bildschirme 3, 4 kann vorteilhafterweise eine regelbare Hintergrundbeleuchtung vorgesehen sein. Die Anzeige auf dem Bildschirm 3 oder den Bildschirmen 3, 4 sowie die Hintergrundbeleuchtung können selbsttätig mit dem Auf- oder Zuklappen des Gehäuses ein- oder ausschaltbar sein.

Das Gehäuse kann mit einer Haltevorrichtung (nicht gezeigt) zum Aufnehmen des Bildschirmstiftes 15 zur Benutzung als Betätigungs-, Beschriftungs-, Skizzier- und/oder Bearbeitungswerkzeug versehen sein.

Die vorliegende Erfindung stellt weiterhin die folgenden Ausführungsformen bereit.
1. Digitales Buch als zumindest Wiedergabeeinrichtung, insbesondere zur Wiedergabe von Textinformation, gekennzeichnet durch
   a) ein buchartig auf- und zuklappbares Gehäuse (G) mit zumindest einer Klappachse (A), einem Hauptteil (1) und zumindest einem Nebenteil (2), welche Teile zusammen einen Buchrückenteil (BR) bilden,
   b) eine Anzeigeeinheit (D), die zumindest zweiteilig ausgebildet und derart angeordnet ist, dass der Hauptteil (1) mit zumindest einem Bildschirm (3) und der zumindest eine Nebenteil (2) mit zumindest einem Bildschirm (4) im aufgeklappten Zustand des Gehäuses (G) dem Benutzer wie Seiten eines Buches zur Ansicht und einer ggf. erforderlichen Bearbeitung zur Verfügung stehen,
   c) eine Steuereinheit (10) mit Mitteln zur Aufnahme, Speicherung, Verarbeitung und Wiedergabe von Information, wobei die Information in Form von Text-, Bild-, Graphik-Audio- und/oder Videoinformation gegeben sein kann,
   d) zumindest eine Bedienungseinheit (6) mit Bedienungselementen zur Benutzung des digitalen Buches als Informationsaufnahme-/-bearbeitungs-/-wiedergabeeinrichtung,
   e) eine Schnittstelleneinheit (11) zur Zu- und Abführung von Information und zur Zuführung von Energie und
   f) eine Stromversorgungseinrichtung (12) zur Energieversorgung der Einheiten (D, 10, 11).
2. Digitales Buch nach Ausführungsform 1, **dadurch gekennzeichnet, dass** der Nebenteil (2) oder die Nebenteile (2a, 2b) derart ausgebildet ist/sind, dass er/sie von dem Hauptteil (1) elektrisch und/oder mechanisch trennbar ist/sind, so dass der Hauptteil (1) für sich allein benutzbar ist.
3. Digitales Buch nach Ausführungsform 1, **dadurch gekennzeichnet, dass** die Schnittstelleneinheit (11) Mittel (12, 13) zur Übertragung von Information und Energie enthält.
4. Digitales Buch nach Ausführungsform 3, **dadurch gekennzeichnet, dass** die Schnittstelleneinheit (11) einen Einsteckschacht (5) zumindest mit einer Leseeinrichtung zum Einstecken einer PC-Karte (5') oder dgl. und zum elektrischen Verbinden derselben zumindest zum Lesen der PC-Karte (5') oder dgl. mit der Schnittstelleneinheit (11) enthält.
5. Digitales Buch nach Ausführungsform 1 oder 2, **dadurch gekennzeichnet, dass** eine als Zusatzeinrichtung für das digitale Buch fungierende Versorgungseinheit (VE) vorgesehen ist, die derart ausgebildet ist, dass sie eine Aufnahmeöffnung (VE') und einen Führungs- und Versorgungsstift (7) aufweist, wobei das digitale Buch im zugeklappten Zustand des Gehäuses (G) zur Zu- und Abführung von Information, zur Zuführung von Energie und zur Aufbewahrung des digitalen Buches mittels des Führungs- und Versorgungsstifts (7) einsteckbar ist.
6. Digitales Buch nach einer der Ausführungsformen 1 bis 4, **dadurch gekennzeichnet, dass** die Steuereinheit (10) mit den Mitteln zur Aufnahme, Speicherung, Verarbeitung und Wiedergabe von Information eine Speichereinrichtung mit zumindest einem RAM, einem ROM und/ oder einem EPROM, zumindest einen Prozessor (CPU), zumindest eine Steuereinrichtung (ST), zumindest eine Treiberschaltung (TR) und eine Busleitung (BL) enthält.
7. Digitales Buch nach Ausführungsform 1, **dadurch gekennzeichnet, dass** die zumindest eine Bedienungseinheit (6) als die Bedienungselemente Richtungstasten und Funktionstasten enthält, die für verschiedenartige Funktionen einzeln oder in Kombination zu betätigen sind.
8. Digitales Buch nach Ausführungsform 1, **dadurch gekennzeichnet, dass** die Anzeige-einheit (D) eine Funktion zum Anzeigen des Stromversorgungsstatus vorzugsweise auf dem Bildschirm des Hauptteils (1) aufweist.
9. Digitales Buch nach Ausführungsform 1 oder 2, **dadurch gekennzeichnet, dass** der Bildschirm (3) oder die Bildschirme (3, 4) der Anzeigeeinheit (D) flexibel ausgebildet ist/sind, dass für den Bildschirm (3) oder die Bildschirme (3, 4) eine regelbare Hintergrundbeleuchtung vorgesehen ist und dass die Anzeige auf dem Bildschirm (3) oder den Bildschirmen (3, 4) sowie die Hintergrundbeleuchtung selbsttätig mit dem Auf-oder Zuklappen des Gehäuses (G) ein- oder ausschaltbar sind.
10. Digitales Buch nach Ausführungsform 1 oder 2, **dadurch gekennzeichnet, dass** das Gehäuse (G) mit einer Haltevorrichtung zum Aufnehmen eines Bildschirmstifts (15) zur Benutzung als Betätigungs-, Beschriftungs-, Skizzier- und/oder Bearbeitungswerkzeug versehen ist.
11. Digitales Buch, insbesondere zur Wiedergabe von Text- und Bildinformation, aufweisend :
   a) ein Gehäuse (G) mit einer flächigen Anzeigeeinheit (D) mit mindestens einem flachen Bildschirm (3, 4)
   b) mindestens einem Manipulationsbereich (60h) zur Bedienung durch einen Benutzer,
   c) wobei der Manipulationsbereich in der Randzone der Anzeigeneinheit (D) derart ausgebildet ist, dass der Benutzer Bedienvorgänge mit den Fingern einer Hand ausführen kann.
12. Digitales Buch nach Ausführungsform 11, **dadurch gekennzeichnet, dass**
   a) der Manipulationsbereich (60h) mindestens zwei betätigbare Bedienelemente aufweist, und
   b) die Anordnung der betätigbaren Bedienelemente in dem Manipulationsbereich (60h) derart ausgestaltet ist, dass die betätigbaren Bedienelemente mit den Fingern einer Hand gleichzeitig betätigbar sind.
13. Digitales Buch nach Ausführungsform 11 oder 12, **dadurch gekennzeichnet, dass** der Bedienvorgang durch Einwirkungen der Finger des Benutzers auf den Manipulationsbereich (60h) ausführbar ist, ohne dass dazu eine wesentliche Verschiebung der Handwurzel der Hand des Benutzers relativ zum Gehäuse (G) erforderlich ist.
14. Digitales Buch nach Ausführungsform 11, 12 oder 13, **dadurch gekennzeichnet, dass** das Gehäuse (G) innerhalb des Manipulationsbereiches (60h) auf der dem flachen Bildschirm abgewandten Seite betätigbare Bedienelemente aufweist.
15. Digitales Buch nach einer der Ausführungsformen 11 bis 14, **dadurch gekennzeichnet**, dass der Bildschirm (3, 4) mindestens im Manipulationsbereich als druckempfindlicher Touchscreen ausgeführt ist.
16. Digitales Buch nach Ausführungsform 15, **dadurch gekennzeichnet, dass** der Bildschirm (3, 4) mindestens in seinem Randbereich als druckempfindlicher Touchscreen ausgeführt ist, wobei mindestens ein Bildschirmeckbereich oder ein in der Mitte eines Randabschnittes gelegener Bereich zur Auslösung bestimmter Funktionen betätigbar ist.
17. Digitales Buch nach einer der Ausführungsformen 13 bis 16, **dadurch gekennzeichnet, dass** die Bedienelemente und/oder die druckempfindlichen Bereiche des Bildschirms (3, 4) einzeln oder in Kombination
   - Blätterfunktionen zum Navigieren im dargestellten Buchinhalt,
   - Bereitstellungsfunktionen für Auswahlmenüs oder
   - Selektionsfunktionen innerhalb bereitgestellter Auswahlmenüs auslösen.
18. Digitales Buch nach Ausführungsform 17, **dadurch gekennzeichnet, dass** bestimmte Bedienelemente und/oder druckempfindliche Bereiche des Bildschirmes (3, 4) einzeln oder in Kombination im Grundzustand einer bestimmten ersten Funktionalität zugeordnet sind, unmittelbar nach dem Auslösen einer Bereitstellungsfunktion für ein Auswahlmenü jedoch in einem Selektionszustand eine Selektionsfunktion innerhalb dieses bereitgestellten Auswahlmenüs auslösen.
19. Digitales Buch nach Ausführungsform 17 oder 18, **dadurch gekennzeichnet, dass** die Auswahlmenüs ausschließlich in einem Randbereich des Bildschirmes angezeigt werden, ohne den dargestellten Buchinhalt abzudecken.
20. Digitales Buch, insbesondere zur Wiedergabe von Text- und Bildinformation, aufweisend :
   a) ein Gehäuse (G) mit einerflächigen Anzeigeeinheit (D) mit mindestens einem flachen Bildschirm (3, 4)
   b) mindestens einem Manipulationsbereich (60h) zur Bedienung durch einen Benutzer,
   c) innerhalb des Manipulationsbereiches (60h) auf der dem flachen Bildschirm (3, 4) abgewandten Seite mindestens ein betätigbares Bedienelement,
   d) wobei das betätigbare Bedienelement bei Betätigung mindestens ein Auswahlmenü auf dem Bildschirm (3 ,4) bereitstellt oder ein bereitgestelltes Auswahlmenü selektiert.
21. Digitales Buch nach Ausführungsform 20, **dadurch gekennzeichnet, dass** der Bildschirm (3, 4) mindestens im Manipulationsbereich als druckempfindlicher Touchscreen ausgeführt ist.
22. Digitales Buch nach Ausführungsform 21, **dadurch gekennzeichnet, dass** der Bildschirm (3, 4) mindestens in seinem Randbereich als druckempfindlicher Touchscreenausgeführt ist, wobei mindestens ein Bildschirmeckbereich oder ein in der Mitte eines Randabschnittes gelegener Bereich zur Auslösung bestimmter Funktionen betätigbar ist.
23. Digitales Buch nach einer der Ausführungsformen 21 oder 22, **dadurch gekennzeichnet, dass** die Bedienelemente und/oder die druckempfindlichen Bereiche des Bildschirms (3, 4) einzeln oder in Kombination Blätterfunktionen zum Navigieren im dargestellten Buchinhalt, Bereitstellungsfunktionen für Auswahlmenüs oder Selektionsfunktionen innerhalb bereitgestellter Auswahlmenüs auslösen.
24. Digitales Buch nach Ausführungsform 23, **dadurch gekennzeichnet, dass** bestimmte Bedienelemente und/oder druckempfindliche Bereiche des Bildschirmes (3, 4) einzeln oder in Kombination im Grundzustand einer bestimmten ersten Funktionalität zugeordnet sind, unmittelbar nach dem Auslösen einer Bereitstellungsfunktion für ein Auswahlmenü jedoch in einem Selektionszustand eine Selektionsfunktion innerhalb dieses bereitgestellten Auswahlmenüs auslösen.
25. Digitales Buch nach Ausführungsform 23 oder 24, **dadurch gekennzeichnet, dass** die Auswahlmenüs ausschließlich in einem Randbereich des Bildschirmes angezeigt werden, ohne den dargestellten Buchinhalt abzudecken.
26. Digitales Buch, insbesondere zur Wiedergabe von Text- und Bildinformation,
   a) mit einem Gehäuse (G) mit einerflächigen Anzeigeeinheit (D) mit mindestens einem flachen Bildschirm (3, 4),
   b) wobei der Bildschirm (3, 4) mindestens im Randbereich als druckempfindlicher Touchscreen ausgeführt ist, und
   c) wobei durch die Betätigung des druckempfindlichen Touchscreens an mindestens einer vorbestimmten Stelle der Bildschirm in einen Auswahlzustand mit mindestens einem Auswahlmenü umgeschaltet wird.
27. Digitales Buch nach Ausführungsform 26, **dadurch gekennzeichnet, dass** der Bildschirm (3, 4) im Grundzustand den Buchinhalt ohne Auswahlmenüs wiedergibt.
28. Digitales Buch, insbesondere zur Wiedergabe von Text- und Bildinformation, aufweisend :
   a) eine Anzeigeeinheit (D) mit mindestens einem Bildschirm (3, 4)
   b) eine Bedieneinrichtung, die dem Benutzer Bedienvorgänge ermöglicht,
   c) eine Koppelvorrichtung zum elektrischen Ankoppeln einer Datenträgereinheit,
   d) wobei die Koppelvorrichtung nach dem Ankoppeln der Datenträgereinheit automatisch Daten aus der Datenträgereinheit ausliest, und
   e) wobei sowohl der auf der Anzeigeeinheit dargestellte Buchinhalt als auch die Gesamtheit der dem Benutzer zur Verfügung stehenden Bedienfunktionen durch die aus der Datenträgereinheit ausgelesenen Daten bestimmt sind.
29. Digitales Buch, insbesondere zur Wiedergabe von Text- und Bildinformation, aufweisend:
   a) ein Gehäuse (G) mit einer Anzeigeeinheit (D) mit mindestens einem Bildschirm 3, 4
   b) wobei die Rückseite der Anzeigeeinheit (D) eine im Wesentlichen zylindrische konkave erste Einwölbung aufweist,
   c) wobei mindestens eine Aussenkante der Anzeigeeinheit (D) als Haltegriff ausgeführt ist und eine größere Dicke aufweist als die Anzeigeeinheit im eingewölbten Bereich.
30. Digitales Buch nach Ausführungsform 29, **dadurch gekennzeichnet, dass** mindestens ein Haltegriff elektronische Bauteile enthält.
31. Digitales Buch nach Ausführungsform 30, **dadurch gekennzeichnet, dass** mindestens ein Haltegriff eine Stromversorgungseinrichtung enthält.
32. Digitales Buch nach Ausführungsform 29, 30 oder 31, **dadurch gekennzeichnet, dass** zwei gegenüberliegende Aussenkanten der Anzeigeeinheit als Haltegriffe ausgeführt sind.
33. Digitales Buch nach einer der Ausführungsformen 29 bis 32, **dadurch gekennzeichnet, dass** die Rückseite der Anzeigeeinheit (D) eine im Wesentlichen zylindrische konkave zweite Einwölbung aufweist, die senkrecht zu der ersten Einwölbung angeordnet ist.
34. Digitales Buch nach einer der Ausführungsformen 29 bis 33, **dadurch gekennzeichnet, dass** mindestens ein Haltegriff mit einer elektrischen Steckervorrichtung ausgestattet ist.
35. Digitales Buch nach einer der Ausführungsformen 29 bis 34, **dadurch gekennzeichnet, dass** die Rückseite der Anzeigeeinheit mindestens ein Bedienelement aufweist.
36. Digitales Buch nach einer der Ausführungsformen 29 bis 35, **dadurch gekennzeichnet, dass** die Rückseite der Anzeigeeinheit kompressibel ist.
37. Digitales Buch nach einer der Ausführungsformen 29 bis 36, **dadurch gekennzeichnet, dass** die Anzeigeeinheit biegsam ist.
38. Digitales Buch, insbesondere zur Wiedergabe von Text- und Bildinformation, aufweisend eine elektrische Steckverbindungseinrichtung zur Stromversorgung und/oder zur Übertragung von Datensignalen von oder zu anderen Informationsverarbeitungssystemen.
39. Digitales Buch nach Ausführungsform 38, **dadurch gekennzeichnet, dass** die Steckverbindungseinrichtung in der unteren Kante der Anzeigeeinrichtung angeordnet ist.
40. Digitales Buch nach Ausführungsform 39, **dadurch gekennzeichnet, dass** das Buch zweiteilig aufgebaut ist und die Steckverbindungseinrichtung im Bereich der Unterseite des Drehscharniers angeordnet ist.
41. Digitales Buch nach einer der Ausführungsformen 38 bis 41, **dadurch gekennzeichnet, dass** die Steckverbindereinrichtung eine Klinkensteckervorrichtung ist.
42. Digitales Buch nach Ausführungsform 41, **dadurch gekennzeichnet, dass** die Steckverbindereinrichtung als Haltevorrichtung zum Aufstellen des digitalen Buches in einer Versorgungsstation dient.
43. Digitales Buch nach Ausführungsform 38 bis 42, **dadurch gekennzeichnet, dass** die Steckverbindereinrichtung zum Verbinden mit verschiedenartigen Geräten einsetzbar ist.
44. Digitales Buch, insbesondere zur Wiedergabe von Text- und Bildinformation, aufweisend eine Anzeigeeinheit D mit mindestens einem Bildschirm (3, 4), wobei die Anzeigeeinheit flexibel ausgebildet ist.
45. Digitales Buch nach Ausführungsform 44, **dadurch gekennzeichnet, dass** die Anzeigeeinheit druckkompressibel ist.
46. Digitales Buch nach Ausführungsform 44 oder 45, **dadurch gekennzeichnet, dass** die Anzeigeeinheit biegsam ist.

Hinweis auf beispielhaften Charakter des Beschriebenen.

Die vorliegende Erfindung ist nicht auf die beschriebenen Ausführungsbeispiele beschränkt. Vielmehr können durch den Fachmann verschiedenartige Modifizierungen der Ausführungsbeispiele vorgenommen werden, ohne dass dazu der Schutzumfang, wie er durch die Ansprüche bestimmt ist, verlassen werden müsste.

## Patentansprüche

1. Mobile Anzeigevorrichtung, insbesondere zur Wiedergabe von Text- und Bildinformation, aufweisend:
a) eine Anzeigeeinheit (D) mit mindestens einem Bildschirm (3,4),
b) eine Bedieneinrichtung, die dem Benutzer Bedienvorgänge ermöglicht,
c) eine Koppelvorrichtung mit einer Aufnahmeöffnung (50) zum Einschieben und zum elektrischen Ankoppeln einer Datenträgereinheit (50'),
d) wobei das Ankoppeln der Datenträgereinheit ein Einrichten und/oder Einstellen der Anzeigevorrichtung bewirkt und/oder das nach dem Ankoppeln der Datenträgereinheit automatisch Daten aus der Datenträgereinheit ausgelesen werden.

2. Mobile Anzeigevorrichtung nach Anspruch 1, wobei die Koppelvorrichtung zum elektrischen Ankoppeln einer Speicherkarte ausgebildet ist.

3. Mobile Anzeigevorrichtung nach Anspruch 1 oder 2, wobei der auf der Anzeigeeinheit dargestellte Inhalt und/oder entsprechende dem Benutzer zur Verfügung stehenden Bedienfunktionen durch aus der Datenträgereinheit ausgelesene Daten bestimmt sind.

4. Mobile Anzeigevorrichtung nach einem der vorangegangen Ansprüche, wobei die Bedieneinrichtung zum Bedienen der Bedienfunktionen Kombinationstasten, eine Mehrfunktionstaste, einen Cursor, ein Slide-Pad, ein Track-Ball, ein Induktionsfeld, kapazitative Näherungsschalter, Miniaturtasten und/oder einen TouchScreen umfasst.

5. Mobile Anzeigevorrichtung nach einem der vorangegangen Ansprüche, wobei die Anzeigevorrichtung derart ausgebildet ist, dass ein Inhalt der Datenträgereinrichtung oder eine erste Information nach erfolgreicher Kopplung ohne weitere Handlung durch den Benutzer angezeigt wird.

6. Mobile Anzeigevorrichtung nach einem der vorangegangen Ansprüche, wobei die Datenträgereinheit Software- und/oder Hardwarebestandteile, insbesondere einen integrierten Schaltkreis, eine Batterie, einen Speicher, einen Sender für kabellose Informationsübertragung und/oder einen Empfänger für kabellose Informationsübertragung, zur Erweiterung des Leistungsspektrums der Anzeigevorrichtung und/oder zur Übernahme von Bedienfunktionen enthält.

7. Mobile Anzeigevorrichtung nach einem der vorangegangen Ansprüche, wobei die Anzeigevorrichtung und/oder die Datenträgereinheit derart ausgebildet sind, dass mit der Kopplung der Datenträgereinheit ein selbsttätiges Ein- oder Ausschalten der Anzeigevorrichtung bewirkt wird.

8. Mobile Anzeigevorrichtung nach einem der vorangegangen Ansprüche, wobei die Anzeigevorrichtung mehrteilig, insbesondere zweiteilig, aufgebaut ist, wobei das Gehäuse (G) mindestens eine Klappachse (A), einen Haupt-Teil (1) und zumindest einen Neben-Teil (2) umfasst, so dass das Gehäuse buchartig auf- und zuklappbar ist und wobei der zumindest eine Nebenteil und der Haupt-Teil jeweils einen Bildschirm umfassen, wobei in einem Anzeigeverbund-Betriebsmodus ein erstes Dokument über beide Bildschirme angezeigt wird und in einem Anzeigegetrennt-Betriebsmodus das Dokument nur über einen Bildschirm angezeigt wird.

9. Mobile Anzeigevorrichtung nach einem der vorangegangen Ansprüche, wobei die Anzeigevorrichtung und/oder die Datenträgereinheit derart ausgebildet sind, dass mit der Kopplung der Datenträgereinheit ein automatisches Umschalten von einem Anzeigeverbund-Betriebsmodus in einen Anzeigegetrennt-Betriebsmodus oder von einem Anzeigegetrennt-Betriebsmodus in einen Anzeigeverbund-Betriebsmodus bewirkt wird.

10. Mobile Anzeigevorrichtung nach einem der vorangegangen Ansprüche, wobei die Anzeigevorrichtung eine zweite Koppelvorrichtung umfasst und wobei das automatische Umschalten von einem Anzeigegetrennt-Betriebsmodus in einen Anzeigeverbund-Betriebsmodus und umgekehrt, vorzugsweise selbsttätig durch Koppeln und/oder Entkoppeln einer ersten und/oder zweiten Datenträgereinheit mit anzuzeigenden Dokumenteninformationen bewirkt wird.

11. Mobile Anzeigevorrichtung nach einem der vorangegangenen Ansprüche, wobei die Anzeigeeinrichtung dazu eingerichtet ist die Datenträgereinheit zu identifizieren und/oder gespeicherte Inhalte selbsttätig aus der Datenträgereinheit zu initialisieren.

12. Datenträgereinheit zum Ankoppeln an eine mobile Anzeigevorrichtung nach einem der vorangegangenen Ansprüche, wobei die Datenträgereinheit derart ausgebildet ist, das ein Einrichten und/oder Einstellen der Anzeigevorrichtung bewirkt wird und/oder das nach dem Ankoppeln der Datenträgereinheit automatisch Daten aus der Datenträgereinheit ausgelesen werden.

13. Datenträgereinheit zum Ankoppeln an eine mobile Anzeigevorrichtung nach Anspruch 11, wobei die Datenträgereinheit derart ausgebildet ist, dass ein auf der Anzeigevorrichtung dargestellter Inhalt und/oder entsprechende dem Benutzer zur Verfügung stehenden Bedienfunktionen durch aus der Datenträgereinheit ausgelesene Daten bestimmt sind.

14. Datenträgereinheit nach Anspruch 12 oder 13, wobei die Datenträgereinheit eine Speicherkarte ist.

15. Datenträgereinheit nach einem der Ansprüche 12 - 14, wobei die Datenträgereinheit zum Einschieben in die mobile Anzeigevorrichtung ausgebildet ist und/oder die Datenträgereinheit derart ausgebildet oder eingerichtet ist, dass die Anzeigevorrichtung die Datenträgereinheit identifizieren kann und/oder das die Anzeigevorrichtung selbsttätig auf der Datenträgereinheit gespeicherte Inhalte initialisiert.

16. Datenträgereinheit nach einem der Ansprüche 12 - 15, wobei die Datenträgereinheit Software- und/oder Hardwarebestandteile, insbesondere einen integrierten Schaltkreis, eine Batterie, einen Speicher, einen Sender für kabellose Informationsübertragung und/oder einen Empfänger für kabellose Informationsübertragung, zur Erweiterung des Leistungsspektrums der Anzeigevorrichtung und/oder zur Übernahme von Bedienfunktionen enthält.

17. Datenträgereinheit nach einem der Ansprüche 12 - 16, wobei die Datenträgereinheit einen Speicher mit Dokumenteninformationen (50') umfasst, so dass alle zur Bedienung dieses Dokumentes notwendigen Funktionen und/oder Bedieninformationen auf der mobilen Anzeigevorrichtung zur Verfügung gestellt werden.
